# EUROPEAN PATENT SPECIFICATION

(11) **EP 3 382 446 B1**
(45) Date of publication and mention of the grant of the patent: **30.03.2022**
(21) Application number: 17199117.7
(22) Date of filing: 30.10.2017
(51) Int. Cl.: G02F 1/13357, G02F 1/1333, G02B 6/00

(54) **DISPLAY DEVICE**
ANZEIGEVORRICHTUNG
AFFICHEUR

(30) Priority: 30.03.2017 US 201762478680 P; 19.05.2017 US 201762508469 P; 01.06.2017 CN 201710404081; 27.06.2017 CN 201710500503; 28.09.2017 US 201715718322
(43) Date of publication of application: 03.10.2018
(73) Proprietor: InnoLux Corporation, Jhu-Nan Site, Miao-Li County 350 (TW)
(72) Inventor: TING, Chin-Lung, 350 Jhu-Nan Site, Hsinchu Science Park, Jhu-Nan, Miao-Li County (TW); CHEN, Chien-Hung, 350 Jhu-Nan Site, Hsinchu Science Park, Jhu-Nan, Miao-Li County (TW); LIN, Ting-Yen, 350 Jhu-Nan Site, Hsinchu Science Park, Jhu-Nan, Miao-Li County (TW); WANG, Hui-Chi, 350 Jhu-Nan Site, Hsinchu Science Park, Jhu-Nan, Miao-Li County (TW); CHEN, Yen-Liang, 350 Jhu-Nan Site, Hsinchu Science Park, Jhu-Nan, Miao-Li County (TW); LIN, Fang-Ho, 350 Jhu-Nan Site, Hsinchu Science Park, Jhu-Nan, Miao-Li County (TW)
(74) Representative: 2K Patentanwälte Blasberg Kewitz & Reichel

(56) References cited:
- EP-A1- 3 141 945
- WO-A1-2016/031397
- WO-A2-2008/153293
- CN-A- 105 334 665
- US-A1- 2009 219 734
- US-A1- 2016 299 285

## Description

### CROSS-REFERENCE TO RELATED APPLICATIONS

The present application claims priority to U.S. Provisional Patent Application No. 62/478,680 and 62/508,469, respectively filed on March 30, 2017 and May 19, 2017, and Chinese Patent Application Serial Numbers 201710500503.9 and 201710404081.5, respectively filed on June 27, 2017 and June 1, 2017.

### BACKGROUND

### Technical Field

The present disclosure relates to a display device, and more particularly to a lighter and thinner display device.

### Description of the Related Art

Because liquid-crystal display devices have advantages such as low power consumption, no radiation contamination, and compatibility with semiconductor processing technologies, these liquid-crystal display devices are already widely used in various electronic devices, such as laptops, cell phones, digital cameras and personal digital assistants. A backlight module is used in the liquid-crystal display device to project light on the display panel to display an image. Generally, the display panel and the backlight module of a liquid-crystal display device are fixed between the plastic frame, the front frame and the back case to provide confinement and protection for the display panel and the backlight module. However, the liquid-crystal display device may not be effectively made thin and light-weight enough because of the structural restrictions of the front frame and back case. Therefore, the current trends of depending are leading towards lighter and thinner display devices.

WO2008/153293 A2, discloses a display device. The display device comprises a frame receiving at least one of a liquid crystal panel and a backlight unit, an adhesive layer coupling the liquid crystal panel to the backlight unit, and wherein the adhesive layer comprises at least one of an adhesive sheet for light diffusion and a polarizer film. WO2016031397 (A1) This display device is provided with a display panel and a lighting part that illuminates the display panel. The lighting part comprises: a light guide plate having a first surface and a second surface, which are opposite to each other; a light source that is arranged to face an end face of the light guide plate; an adhesive layer that is formed adjacent to the first surface of the light guide plate and has a refractive index that is generally equal to the refractive index of the light guide plate; and a light reflecting layer that is bonded to the first surface of the light guide plate with at least the adhesive layer being interposed therebetween.

CN105334665 (A) provides a reflection layer. The reflection layer comprises a plurality of groups of first dielectric films and a plurality of groups of second dielectric films, wherein the dielectric films and the second dielectric films are stacked alternatively; the refractive indexes of the first dielectric films are greater than those of the second dielectric films. The invention also provides a backlight module, comprising a light guide plate, a light source and a reflection layer. According to the backlight module provided by the invention, the light guide plate is made of glass so as to have relatively high hardness, the whole backlight module does not need to be supported by an additional backing plate, so that backlight energy consumption is saved, and the thinning demand can be met; furthermore, a reflector plate is formed by stacking multiple layers of dielectric films with different refractive indexes, so that the reflectivity is greatly promoted, the light emission efficiency of the backlight module is improved, and the reliability and the scraping resistance of the backlight module are improved; meanwhile, as the reflectivity of the reflection layer is very high, the back surface of the backlight module can be used as a mirror, so that the purpose of one screen with multiple functions can be achieved.

EP3141945 A discloses a display apparatus. The display apparatus according to the present invention comprises a display panel with which a source PCB is combined in one side; a rear cover disposed in a rear surface side of the display panel; and a housing supporting at least one of the display panel and the rear cover from a lower surface side of the display panel and being equipped with at least one PCB, wherein the rear cover is made of transparent material through which light passes and at least one penetrating hole corresponding to at least one area of the source PCB is formed in at least one area of the rear cover. According to the present invention, the display panel and the rear cover can be combined easily with each other.

US2016/29928A1 A discloses light source module including a light guide plate (LGP), at least one light emitting element, a reflector, and a plurality of spacer units. The LGP has a first surface, a second surface opposite to the first surface, a light incident surface connecting the first surface and the second surface, and a plurality of optical microstructures. The light emitting element is located adjacent to the light incident surface. The reflector is adhered to the second surface through an adhesive gel. The spacer units are located between the LGP and the reflector, and sizes of the spacer units are larger than or equal to 1 micrometer. The adhesive gel includes a first adhesive gel and a second adhesive gel. The first adhesive gel is located between the spacer units and the LGP, and the second adhesive gel is located between the spacer units and the reflector.

US2009/219734A1 A discloses display device having a light guide plate formed with a display pattern by a plurality of diffusion dots having translucency in a display pattern formed region, a light shielding layer, and a light source. A plurality of the light guide plates are arranged facing each other, and the light shielding layer is sandwiched between the light guide plates. Light from the light source is selectively introduced to one of the light guide plates to display the display pattern of the light guide plate. The light shielding layer has a surface facing an observer's side formed by a low reflectivity material and a surface facing a side opposite to the observer's side formed by a high reflectivity material. A region facing the display pattern of the light guide plate positioned on the side opposite to the observer's side than the light shielding layer is cut out.

### BRIEF SUMMARY

The present invention provides a display device as defined in claim 1. Advantageous embodiments are defined in the dependent claims.

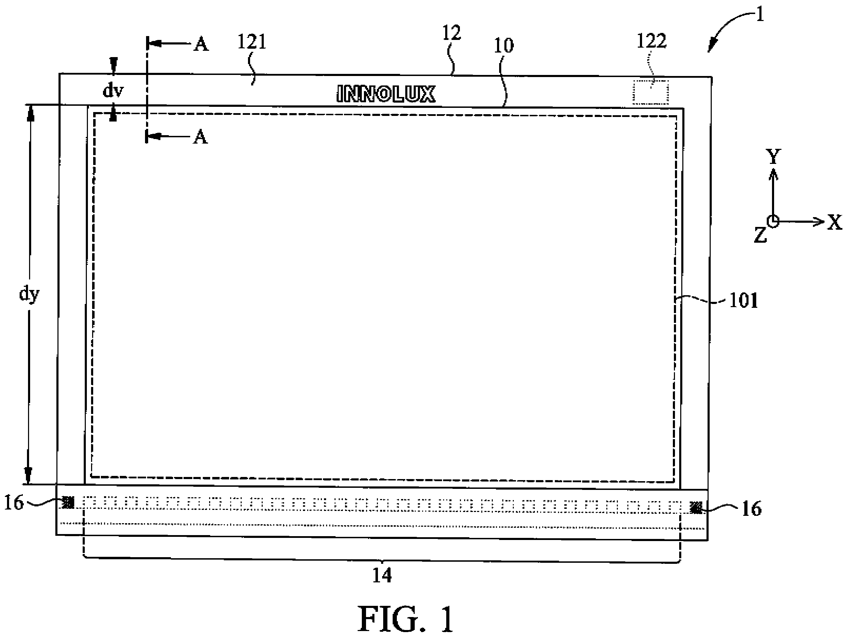

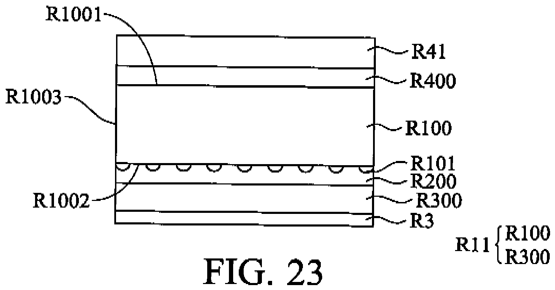

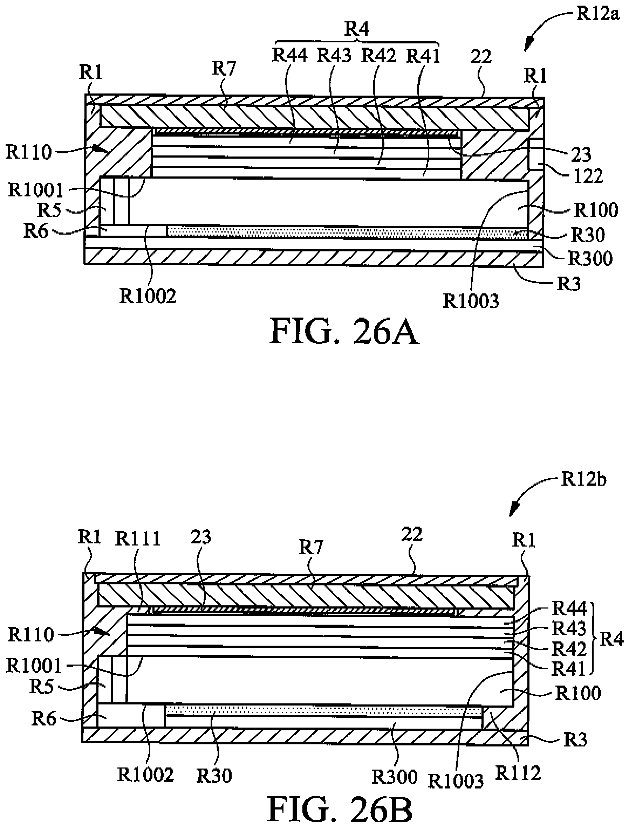

In the following, the term "embodiment of the present disclosure" is widely used throughout the description. It is, however, to be noted, that only the display device disclosed with regard to Figure 26B is an embodiment of the present invention, some of the features of said embodiment being described with reference to Figure 26A. Figures 23-25 and 27-36 disclose details of portions of a display device which can only be regarded as representing an embodiment of the present invention if realised within said display device of Figure 26B. The display devices of Figures 1-22 are no embodiments of the present invention.

### BRIEF DESCRIPTION OF THE DRAWINGS

Fig. 1 is a top view of a display device, in accordance with an embodiment of the present disclosure.
Fig. 2A and 2B are partial cross-sectional views of the display device corresponding to line A-A of Fig. 1.
Fig. 3 is a partial cross-sectional view of a display device, in accordance with another embodiment of the present disclosure.
Fig. 4 is a partial cross-sectional view of a display device, in accordance with another embodiment of the present disclosure.
Fig. 5 is a partial cross-sectional view of a display device, in accordance with another embodiment of the present disclosure.
Fig. 6 is a top view of a display device, in accordance with another embodiment of the present disclosure.
Fig. 7 is a rear perspective view of the display device in Fig. 6.
Fig. 8 is a partial cross-sectional view of a display device, in accordance with another embodiment of the present disclosure.
Fig. 9 is a local three-dimensional view of a display device, in accordance with another embodiment of the present disclosure.
Fig. 10 is a rear perspective view of a display device, in accordance with another embodiment of the present disclosure.
Fig. 11 is a partial cross-sectional view of a display device, in accordance with another embodiment of the present disclosure.
Fig. 12 is a partial cross-sectional view of a display device, in accordance with another embodiment of the present disclosure.
Fig. 13 is a partial cross-sectional view of a display device, in accordance with another embodiment of the present disclosure.
Fig. 14 is a partial cross-sectional view of a display device, in accordance with another embodiment of the present disclosure.
Fig. 15 is a top view of a display device, in accordance with another embodiment of the present disclosure.
Fig. 16 is a partial cross-sectional view of a display device, in accordance with another embodiment of the present disclosure.
Fig. 17 is a partial cross-sectional view of a display device, in accordance with another embodiment of the present disclosure.
Fig. 18 is a top view of an optical element and a first light source, in accordance with another embodiment of the present disclosure.
Fig. 19 is a top view of an optical element and a first light source, in accordance with another embodiment of the present disclosure.
Fig. 20 is a top view of an optical element and a first light source, in accordance with another embodiment of the present disclosure.
Fig. 21 is a side view of the optical element and the first light source in Fig. 20.
Fig. 22 is a side view of an optical element and a first light source, in accordance with another embodiment of the present disclosure.
Fig. 23 is a perspective view showing the structure of a backlight module, and a decorative view according to one exemplificative embodiment of the present disclosure.
Figs. 24A-24C are perspective view showing the structure of a light guide plate and components below a second side thereof according to different aspects of one exemplificative embodiment of the present disclosure.
Figs. 24D and 24E show results from luminance tests of the structures shown in Figs. 24A-24C.
Figs. 25A-25C are perspective view showing the structure of a light guide plate and components above a first side thereof according to different aspects of one exemplificative embodiment of the present disclosure.
Fig. 26A depicts the structure of a display device according to one exemplificative embodiment of the present disclosure.
Fig. 26B depicts the structure of a display device according to another exemplificative embodiment of the present disclosure.
Fig. 27A depicts how a system board of a display device is fixed according to one exemplificative embodiment of the present disclosure.
Fig. 27B depicts how a system board of a display device is fixed according to another exemplificative embodiment of the present disclosure.
Fig. 28 depicts how a stand of a display device is fixed according to one exemplificative embodiment of the present disclosure.
Fig. 29 is a flowchart of assembling a display device according to one exemplificative embodiment of the present disclosure.
Figs. 30A-30D depict the structures of light sources used in display devices according to different exemplificative embodiments of the present disclosure.
Fig. 30E is a perspective view showing the assembling of a light source and a backlight module according to one exemplificative embodiment of the present disclosure.
Figs. 31-35 depict the structures of backlight modules used in display devices according to different exemplificative embodiments of the present disclosure.
Fig. 36 is a cross-sectional view of a display device according to another exemplificative embodiment of the present disclosure.

### DETAILED DESCRIPTION

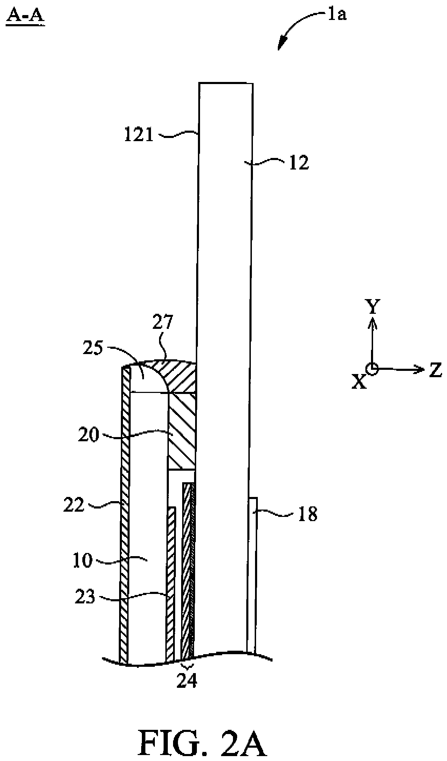

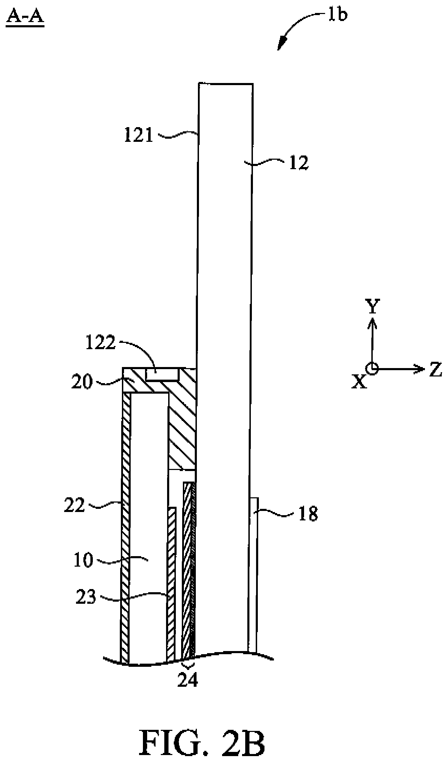

Please refer to Figs. 1, 2A and 2B, wherein Fig. 1 is a top view of a display device 1a, in accordance with an embodiment of the present disclosure, and Figs. 2A and 2B are partial cross-sectional views of the display devices 1a and 1b corresponding to line A-A of Fig.1, wherein Z direction represents the top-view direction of the display devices 1a and 1b.

As shown in Figs. 1, 2A and 2B, the display devices 1a and 1b include a display panel 10, an optical element 12, a first light source 14, a reflector 18, a spacer 20, a first polarization layer 22 and an optical assembly 24. The optical assembly 24 may include at least an optical film, such as a prism sheet, a diffusion sheet, a dual brightness enhancement film (DBEF), etc. The amount of the combination depends on the design requirement, and is not limited herein. In this embodiment, the display devices 1a and 1b may be a liquid-crystal display device, and the display panel 10 may be, but is not limited to, a liquid-crystal display panel. For example, the display panel 10 may be an organic light emitting diode display, inorganic light emitting diode display or quantum dot display, and is not limited thereto. The Z direction may be substantially parallel to the normal direction of a substrate in the display panel 10, and the display panel 10 includes an appearance area 121, wherein the display area 101 is an area in the display panel 10 where an image is displayed. All areas of the display panel 10 that do not belong to the display area 101, belong to the non-display areas.

The optical element 12 is disposed on a side of the display panel 10, and at least one portion of the optical element 12 which extends outward from the display area 101 (the area for display an image) of the display panel 10 and is exposed when observing from the top-view direction (Z direction) functions as a appearance area 121. In other words, at least one portion of the optical element 12 overlaps the display area 101 of the display panel 10 when observing from the top-view direction (Z direction), and a portion of the optical element 12 which is exposed and does not overlap the display area 101 of the display panel 10 functions as the appearance area 121. In the present disclosure, the definition of the appearance area 121 is an exposed area of the optical element 12 where a user may see from the outward appearance of the display devices 1a and 1b. It should be noted that a transparent layer or a color transparent layer (not shown) may be disposed on the appearance area 121 of the optical element 12. In this case the user may still see at least one portion of the appearance area 121 of the optical element 12 through the transparent layer. As a result, brand trademarks, ambient light, touch buttons, and other patterns which may be customized by the user may be displayed through the appearance area 121 of the optical element 12 of the disclosure. Therefore, a backlight module may derive other additional functions besides functioning as a light source. In other words, the portion where the optical element 12 overlays the display area 101 of the display panel 10 is used to guide the light from the light source to the display area 101, wherein the light guided to the display area 101 may optionally be used to affect the display screen, and the appearance area 121 of the optical element 12 is used to guide the light from the light source to an area where it may be observed by the user, except to the display panel 10. In this disclosure, the optical element 12 may be a glass light guide plate, a plastic light guide plate, a diffusion plate, a transparent substrate which has a light guiding function, other components eligible for light guiding, or a combination thereof, which depends on the requirements, and is not limited herein.

The exposed appearance area 121 of the optical element 12 may be adjacent to at least one side of the display panel 10 in the present disclosure. As shown in Fig. 1, the exposed appearance area 121 of the optical element 12 may be adjacent to three sides of the display panel 10 in the present disclosure. Of course, the exposed appearance area 121 of the optical element 12 may also be adjacent to one, two or four sides of the display panel 10 in the present disclosure. In this embodiment, the sides of the appearance area 121 are straight, but they are not limited thereto. In other embodiments, the sides of the appearance area 121 may be irregular (e.g., curved, serrated, etc.). A portion of the appearance area 121 may also have carving, hollow, coating decoration or other patterns which can be customized by the user. In another embodiment, the thickness of the optical element 12 is substantially uniform. In other embodiments, the thickness of the optical element 12 may be adjusted appropriately to meet requirements.

In an embodiment, the ratio of the area of the appearance area 121 to the area of the display panel 10 ranges from 0%to 30% when viewed from the top-view direction (Z direction). In another embodiment, the appearance area 121 is adjacent to an area of a side of the display panel 10, and the ratio of the exposed length dv of the appearance area 121 to the length of the side dy of the display panel 10 in the same direction ranges from 0% to 10%. For example, the ratio of exposed length of the area of the appearance area 121 adjacent to the side of the display panel 10, calculated from the side of the display panel 10, to the length of the side of the display panel 10 in the same Y direction (such as the right side) ranges from 0% to 10% in the Y direction. In other embodiments, the ratio of the exposed length of other sides to the length of the side of the display panel 10 in the same direction also ranges from 0% to 10%.

The first light source 14 and the second light source 16 are disposed adjacent to the optical element 12. In other embodiments, the second light source 16 is optional and may not be disposed. In this embodiment, the first light source 14 and the second light source 16 may be disposed on the same light bar substrate, and the light bar is disposed on a side of the optical element 12. In other words, in cross-section view, the display panel 10 and the first light source 14 are disposed on two adjacent sides of the optical element 12. In this embodiment, the light emitted from the first light source 14 may correspond to the display area 101 of the display panel 10, and the light emitted from the second light source 16 may correspond to the optical element 12 which functions as the appearance area 121. In Fig. 1, for example, the appearance area 121 is adjacent to three sides of the display panel 10, so the light emitted from second light source 16 may correspond to three sides of the appearance area 121 (U-shape). The first light source 14 and the second light source 16 are edge light sources, so the optical element 12 may be a light guide plate or other components having a light guiding function to guide the light emitted from the first light source 14 to the display area 101 of the display panel 10, and to guide the light emitted from the second light source 16 to the three sides of the appearance area 121. Furthermore, the first light source 14 may emit white light or red, green and blue lights, which depends on the requirements. Similarly, the second light source 16 may also emit white light or red, green and blue lights, which depends on the requirements.

In this embodiment, a dispersing pattern may be formed on the appearance area 121 to guide the light. The dispersing pattern may be disposed on all or a portion of the appearance area 121. In addition, it may be patterned to reveal brand trademarks, ambient light, touch buttons, and other patterns. The manufacturing process of the dispersing pattern may include printing, laser, etching, sandblasting or additional lamination, etc. Any structure which can change the route of the light of the optical element 12 through the dispersing pattern is applicable, and is not particularly limited. In addition, the appearance area 121 may also function as an indirect light source or may project the light on the outer wall.

In an embodiment, at least one optoelectronic component 122 may be disposed on the appearance area 121. The location for disposing the optoelectronic component 122 is not limited, and the optoelectronic component 122 may be disposed on any location on the appearance area 121, wherein the disposing amount, the size, and the shape are also not limited, depending on the design requirements. For example, the optoelectronic component 122 may be an infrared sensor, remote control receiver, camera component, touch sensor, speaker, fingerprint recognition component, Bluetooth sensor, Internet communication component (e.g., Wi-Fi transmitter receiver, etc.), highfrequency communication component (e.g., liquid-crystal antenna, GPS, etc.), other peripheral components which may operate with a display, or a combination thereof. In an embodiment, the optoelectronic component 122 and the display panel 10 may be disposed on two opposite sides of the optical element 12. In other words, the optoelectronic component 122 may be disposed on the back of the optical element 12. In another embodiment, at least one accommodating recess (not shown) may be included on the appearance area 121 of the optical element 12, the optoelectronic component 122 is disposed corresponding to the at least one accommodating recess, and at least one portion of the optoelectronic component 122 may be disposed in the at least one accommodating recess.

The reflector 18 and the display panel 10 are disposed on two opposite sides of the optical element 12. In this embodiment, the reflector 18 may be laminated on the optical element 12 to reflect the light or as an aesthetic design to improve the outward appearance. Preferably, the area of the reflector 18 may be greater than or equal to that of the display area 101 of the display panel 10. Therefore, the light emitted from the first light source 14 may be effectively reflected by the reflector 18 to the display area 101 of the display panel 10.

Both the spacer 20 and the optical assembly 24 are disposed between the display panel 10 and the optical element 12. In this embodiment, the spacer 20 may be adhesive material, glass, metal, plastic, or a combination thereof, depending on the actual application. The adhesive material may be double-sided tape or glue. Furthermore, the spacer 20 may be continuously or alternatively disposed, depending on the actual usage. Moreover, the spacer 20 may have a linear shape, T-shape, L-shape (e.g. Fig. 2B), or another shape, depending on the actual application. At least one portion of the spacer 20 may be inserted between the display panel 10 and the optical element 12 to separate them by a specific distance. Therefore, a cavity is formed between the display panel 10 and the optical element 12. In this embodiment, the spacer 20 may be fixed on or in direct contact with the display panel 10 and the optical element 12. In another embodiment, the spacer 20 may have an adhesive function, but it is not limited thereto. In another embodiment, the spacer 20 can be rigid or compressible or with decorating pattern. The spacer 20 may provide protecting function for display panel 10 or serve as an appearance element. The space between the display panel 10 and the optical element 12 may be maintained by the assistance of other components. The optical assembly 24 may be disposed in the cavity between the display panel 10 and the optical element 12 by hanging, gluing or another method. In the present disclosure, the definition of the appearance element is a component which a user may see from the outward appearance. It should be noted that a transparent layer or a color transparent layer (not shown) may be disposed on the appearance element. In this case the user may still see at least one portion of the appearance element through the transparent layer.

A first protective layer 25 and a second protective payer 27 may, as an option, be included in the display panel 10. The first protective layer 25 is mainly for protecting the sides of the display panel 10. In addition to improving the protection of the sides of the display panel 10, the second protective layer 27 may reinforce the adhesion between the optical element 12 and the display panel 10. It is also feasible to dispose only one of the first protective layer 25 and the second protective layer 27, and the material of the first protective layer 25 and the second protective layer 27 may be the same or different. The material of the first protective layer 25 and the second protective layer 27 may be adhesive material, glass, metal, plastic, resin, another suitable material, or a combination thereof, and the color and the coating area of the first protective layer 25 and the second protective layer 27 may also be arbitrarily adjusted for decorative purposes to meet requirements, and is not limited.

The display panel 10 is disposed between the first polarization layer 22 and the optical element 12, and the first polarization layer 22 may at least protrude from a side of the display panel 10 in this embodiment. Is should be noted that all four sides of the first polarization layer 22 may protrude from the display panel 10 from the cross-sectional view, or the area of the first polarization layer 22 may be greater than the area of a substrate of the display panel 10 when viewed from the Z direction. In this embodiment, the area of the first polarization layer 22 is greater than that of the second polarization layer 23. However, in other embodiments, the area of the first polarization layer 22 may be smaller than or equal to that of the display panel 10, or the area of the first polarization panel 22 may be smaller than or equal to one of the substrates of the display panel 10 which are adjacent to the first polarization layer 22 when viewed from the Z direction, which depends on the design requirements. Furthermore, the area of the first polarization layer 22 and the second polarization layer 23 may be the same or different. Moreover, in this embodiment, the front frame, side frame and/or back board are optional and may be omitted from the display devices 1a and 1b to effectively reduce the thickness and weight of the display devices 1a and 1b.

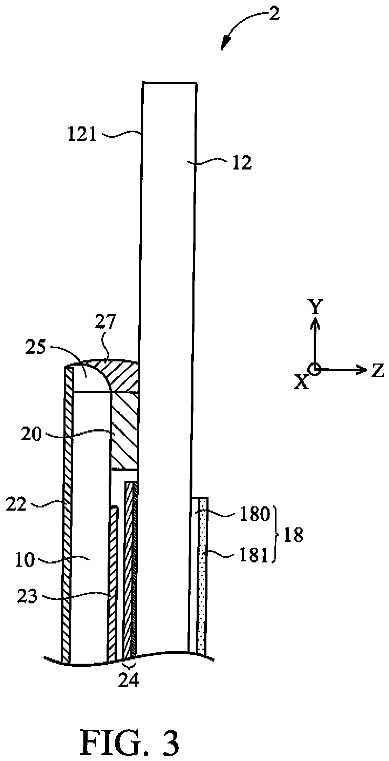

Please refer to Fig. 3, which is a partial cross-sectional view of a display device 2, in accordance with another embodiment of the present disclosure. The main difference between the display device 2 and the display device 1a is that the reflector 18 may be a multilayer structure. As shown in Fig. 3, the reflector 18 may include a reflective layer 180 and an decorative layer 181. The decorative layer 181 may be adhered on the reflective layer 180 by lamination. Alternatively, the decorating pattern may be directly coated, embossed, rolling-pressed or etched onto the reflective layer 180. In this embodiment, the decorative layer 181 may be carbon fiber reinforced plastics (CFRP), other coatings, or outside decorations used as an aesthetic design to improve the outward appearance.

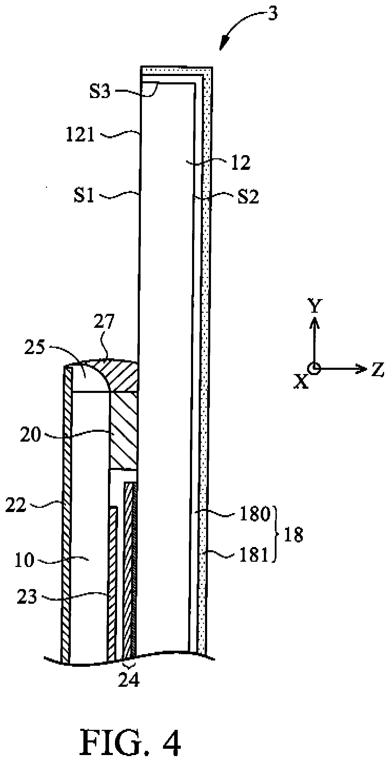

Please refer to Fig. 4, wherein Fig. 4 is a partial cross-sectional view of a display device 3, in accordance with another embodiment of the present disclosure. As shown in Fig. 4, the optical element 12 includes a first side S1, a second side S2 and a third side S3, wherein the first side S1 is opposite to the second side S2, and the third side S3 is adjacent to the first side S1 and the second side S2. The display panel 10 is disposed on the first side S1 of the optical element 12, and the reflector 18 is disposed on the second side S2 of the optical element 12. The main difference between the display device 3 and the display device 1a is that the reflector 18 of the display device 3 is further disposed on at least one portion of the third side S3 of the optical element 12 and covers at least the portion of the side S3. As a result, light leakage from the third side S3 of the optical element 12 may effectively be reduced. It should be noted that the third side S3 of the optical element 12 may be entirely or partially covered by the reflector 18, depending on the actual application.

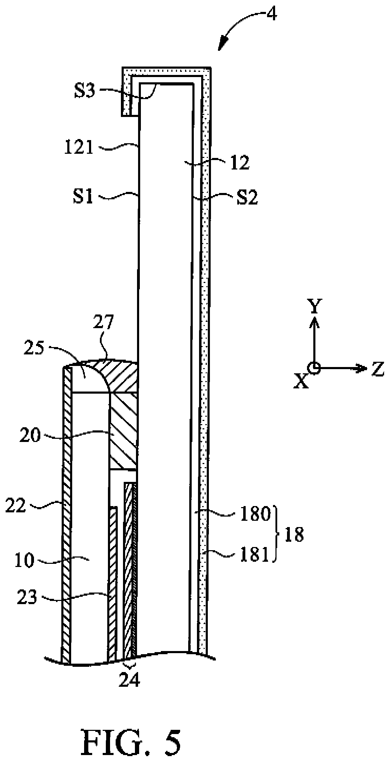

Please refer to Fig. 5, a partial cross-sectional view of a display device 4, in accordance with another embodiment of the present disclosure. The main difference between the display device 4 and the display device 3 is that the reflector 18 extends further from the third side S3 of the optical element 12 to at least one portion of the first side S1 of the optical element 12 to cover at least the portion of the first side S1. As shown in Fig.5, the second side S2, the third side S3 and at least the portion of the first side S1 is covered by the reflector 18.

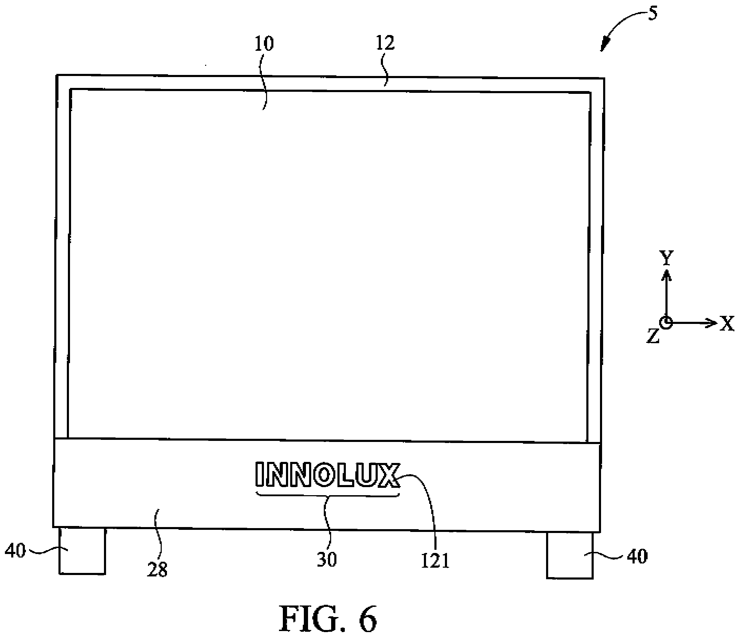

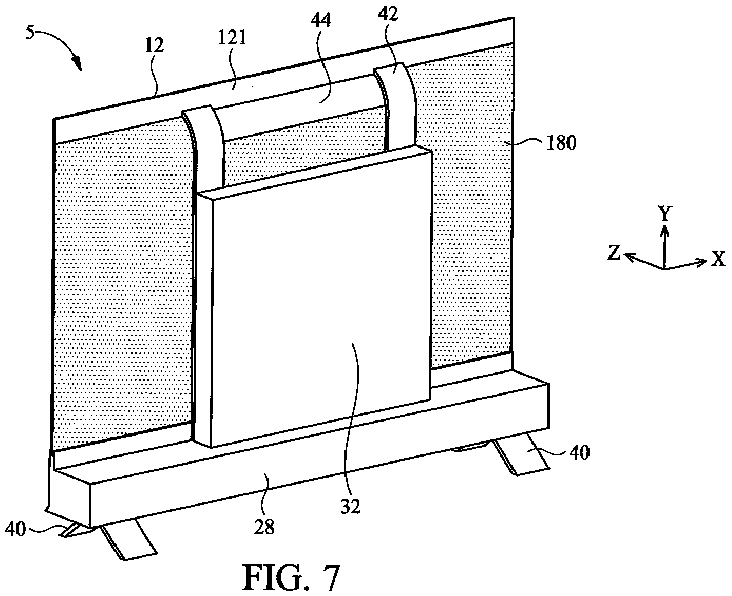

Please refer to Fig. 6 and 7, wherein Fig. 6 is a top view of a display device 5, in accordance with another embodiment of the present disclosure, and Fig. 7 is a rear perspective view of the display device 5 in Fig. 6. The main difference between the display device 5 and the display device 1a is that the display device 5 further includes a holder 28. As shown in Figs. 6 and 7, the display panel 10 and the optical element 12 are disposed on the holder 28. In this embodiment, a hollow pattern 30 may be formed on the holder 28, and a portion of the appearance area 121 of the optical element 12 (e.g., the portion shows "INNOLUX" in Fig. 6) is the area corresponding to and exposed by the hollow pattern 30. In this embodiment, a light bar (not shown) may be affixed in the holder 28 and fitted with the optical element 12 to provide and transmit the backlight source. Furthermore, a speaker (not shown) may be affixed in the holder 28 and may form a space for accommodation by the inner structure of the holder 28 to function as a speaker box or to dispose other control components or traces.

Moreover, the display device 5 may include a board case 32. As shown in Fig. 7, the board case 32 may be disposed on the holder 28, and the holder 28 may, as an option, include two stands 40. It should be noted that when the reflector 18 is disposed on a side of the optical element 12, the board case 32 may also be disposed on the reflector 18. Furthermore, when the reflector 18 has the decorative layer 181 thereon, the decorative layer 181 is disposed between the board case 32 and the reflector 18. In this embodiment, a circuit board component (not shown) formed by control panel, power board, system board, etc. may be stored in the board case 32. In this embodiment, a back track 42 and a handle 44 are further included in the display device 5. As another option, the handle 44 may be disposed on the back track 42. A user may hold the handle 44 to move the display device 5. One end of the back track 42 is connected to the holder 44, and another end of the back track 42 is connected to the optical element 12. In this embodiment, another end of the back track 42 may be affixed to the surface of the appearance area 121 of the optical element 12 through the connection means such as adhesive material, engagement, or screw locking. In other embodiments, another end of the back track 42 may be affixed to any surface of the display panel 10, the optical element 12, the reflector 18 or the decorative layer 181 of the reflector 18 using the adhesive material. Another end of the back track 42 may also contact more than two of them at the same time, and is not limited. The board case 32, handle 44 or back track 42 may be used as a wall hanger.

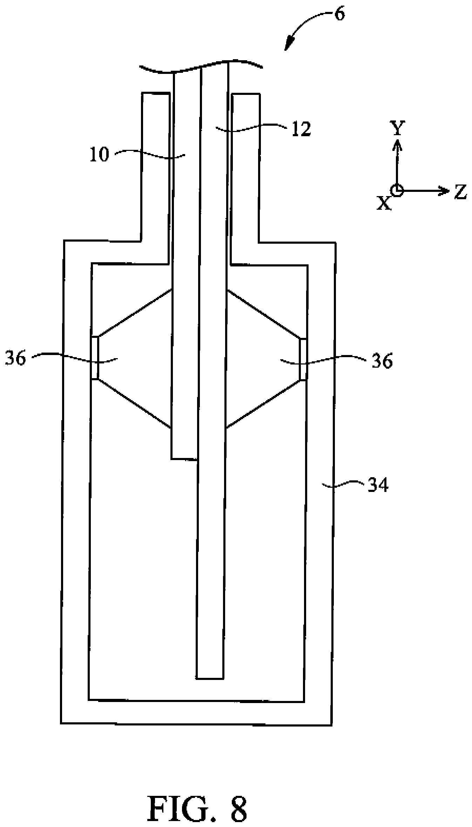

Please refer to Fig. 8, which is a local simplified cross-sectional view of a display device 6, in accordance with another embodiment of the present disclosure. Some components are omitted in Fig. 8, and only the display panel 10 and the optical element 12 are shown. The main difference between the display device 6 and the display device 5 is the design of the holder. As shown in Fig. 8, the holder 34 of the display device 6 further includes two sucking cups 36. The two sucking discs 36 respectively suck the display panel 10 and the optical element 12 to affix the display panel 10 and the optical element 12 in the holder 34.

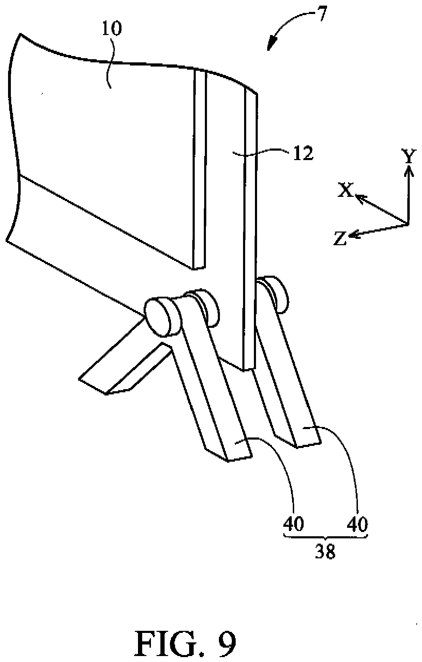

Please refer to Fig. 9, which is a local simplified three-dimensional view of a display device 7, in accordance with another embodiment of the present disclosure. The main difference between display device 7 and display device 5 is the design of the holder. As shown in Fig. 9, a holder 38 of the display device 7 includes two stands 40. In this embodiment, the two stands 40 may be affixed to two sides of the optical element 12 via a notched joint. Furthermore, the two stands 40 may be V-shaped to support the display device 7.

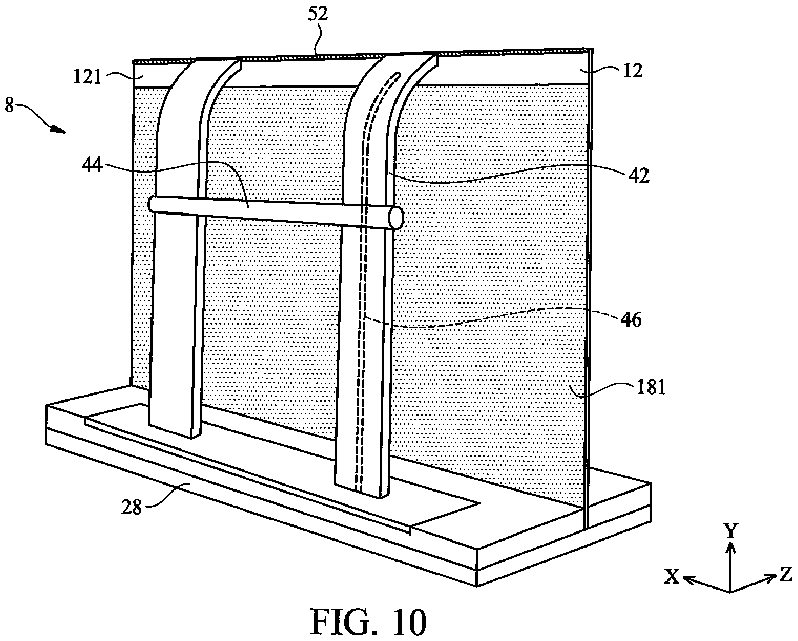

Please refer to Fig. 10, which is a rear perspective view of a display device 8, in accordance with another embodiment of the present disclosure. The main difference between the display device 8 and the display device 5 is that the display device 8 further includes a back track 42. As shown in Fig. 10, one end of the back track 42 is connected to the holder 28, and another end of the back track 42 is connected to a decorating element 52. The decorating element 52 may be a decorating bar, sealant, or a combination thereof. The decorating element 52 may be one piece, optional multi-section or multi-section bonding when functioning as the decorating bar. Besides functioning as a decoration, the decorating element 52 may also be a strength reinforcement component. The decorating element 52 may be coated entirely or selectively when being a sealant, and different colors may be arbitrarily chosen for the color of the sealant, which depends on requirements. In this embodiment, the back track 42 may be affixed to the decorating element 52 through a connection means such as glue, engagement, or screw locking. Furthermore, the back track 42 may be affixed to the surface of the appearance area 121 of the optical element 12 through a connection means such as glue, engagement, or screw locking. In other embodiments, the back track 42 may be affixed to any surface of the display panel 10, the optical element 12, the reflector 18 or the decorative layer 181 of the reflector 18 by an adhesive material. The back track 42 may contact more than two of them at the same time. When the decorative layer 181 is included in the reflector 18, the decorative layer 181 is disposed between the back track 42 and the reflector 18.

It should be noted that another end of the back track 42 may be connected to at least one of the optical element 12, the decorating element 52, the display panel 10, the reflector 18, and the decorative layer 181 of the reflector 18, which depends on the requirements. In other words, the back track 42 may be connected to the abovementioned components alone, be connected to the optical element 12 and the decorating element 52, be connected to the optical element 12 and the reflector 18, or other combinations, and is not limited.

In this embodiment, the display device 8 may further include a handle 44. The handle 44 is disposed on the back track 42. A user may hold the handle 44 to move the display device 8. Furthermore, the back track 42 may include a recess or a hollow structure, and at least one wire 46 or a circuit board (not shown) is disposed in the recess or the hollow structure of the back track 42 to enhance the aesthetics of the display device 8 or to reduce the risk of damaging the wire 46 or the circuit board. In all of the abovementioned embodiments, the mechanical components such as the front frame, side frame or back board, etc. are optional and may be omitted to reduce the thickness and weight of the display device.

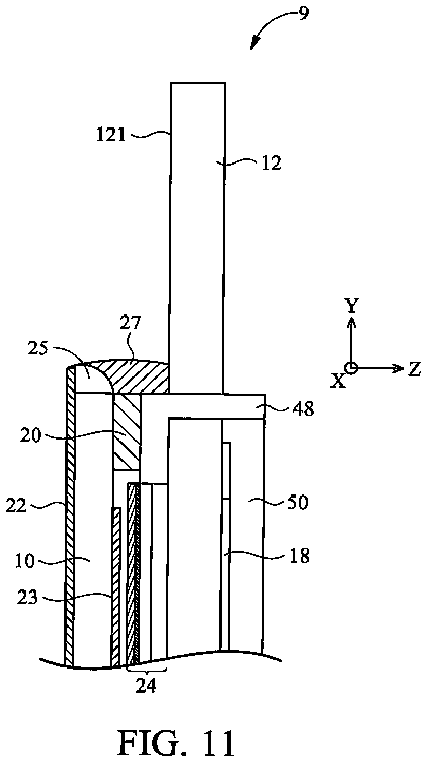

Please refer to Fig. 11, which is a partial cross-sectional view of a display device 9, in accordance with another embodiment of the present disclosure. The main difference between display device 9 and display device 1a is that display device 9 further includes a side frame 48 and a back board 50. In other embodiments, the front frame (not shown), the side frame 48 or the back board 50 may be omitted from the display device. As shown in Fig. 11, the optical element 12 is disposed between the display panel 10 and the back board 50, and the side frame 48 and the back board 50 may be used to affix the optical element 12. At least one portion of the optical element 12 is exposed and extends outwards from the side frame 48 and functions as a appearance area 121. Furthermore, as an option, the side frame 48 and the back board 50 may be exposed to function as an outward appearance frame. The material of the side frame 48 and the back board 50 may be plastic, metal, other materials, or a combination thereof, and is not limited. The materials of the side frame 48 and the back board 50 may be the same or different. The optical element 12, first light source and/or second light source may be at least partially disposed in a space for accommodation formed by the back board 50. In this embodiment, the back track (not shown) may be affixed to the back board 50 through a connection means such as an adhesive material, engagement, or screw locking.

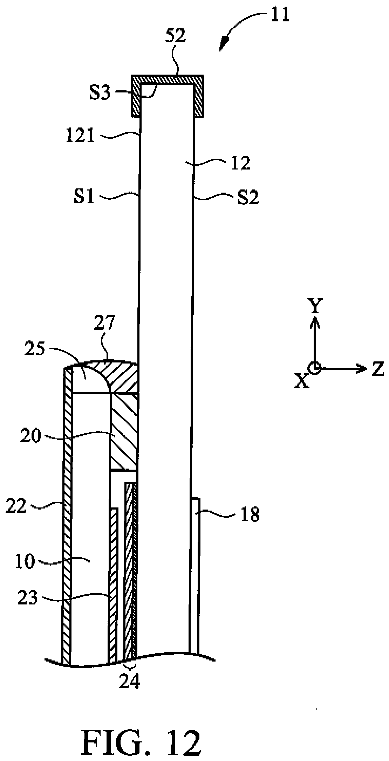

Please refer to Fig. 12, which is a partial cross-sectional view of a display device 11, in accordance with another embodiment of the present disclosure. As shown in Fig. 12, the optical element 12 includes a first side S1, a second side S2 and a third side S3, wherein the first side S1 is opposite to the second side S2, and the third side S3 is adjacent to the first side S1 and the second side S2. The display panel 10 is disposed on the first side S1 of the optical element 12, and the reflector 18 is disposed on the second side S2 of the optical element 12. The main difference between the display device 11 and the display device 1a is that the display device 11 further includes a decorating element 52. The decorating element 52 is disposed on the third side S3 of the optical element 12, and the decorating element 52 covers at least one portion of the third side S3 of the optical element 12. The decorating element 52 may reinforce the strength of the third side S3 of the optical element 12, and may function as a decoration for outward appearance or protection. It should be noted that the third side S3 of the optical element 52 may be fully or partially covered by the decorating element 52, which depends on the requirements. In this embodiment, the decorating element 52 has a U-shape in cross section. However, in other embodiments, the cross section of the decorating element 52 has a linear shape, an arc shape, or another shape, depending on the actual application.

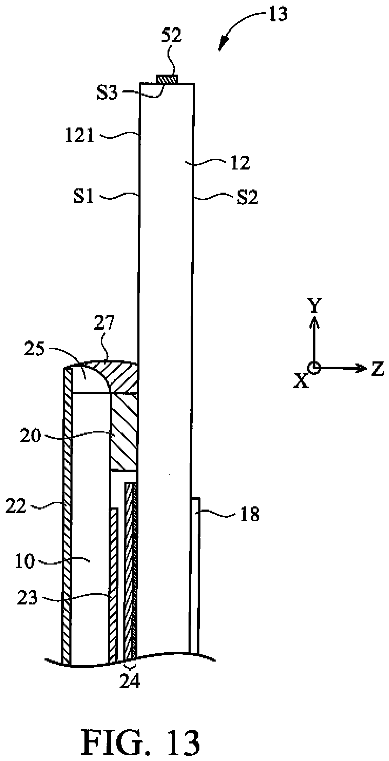

Please refer to Fig. 13, which is a partial cross-sectional view of a display device 13, in accordance with another embodiment of the present disclosure. The main difference between the display device 13 and the display device 11 is that the decorating element 52 of the appearance display device 13 has a linear shape, and the third side S3 of the optical element 12 is partially covered by the decorating element 52 of the appearance display device 13 on the Z direction, as shown in Fig. 13.

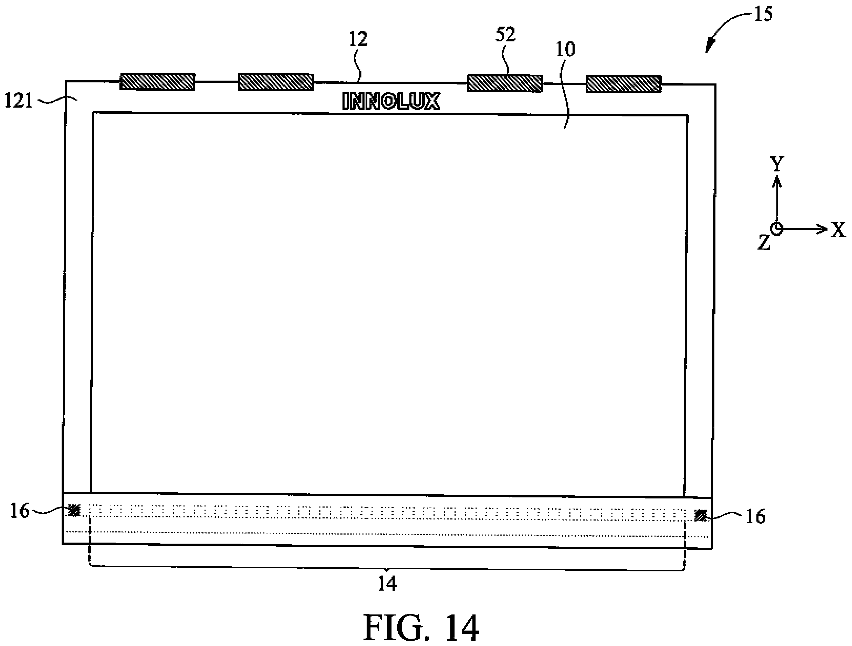

Please refer to Fig. 14, which is a partial cross-sectional view of a display device 15, in accordance with another embodiment of the present disclosure. The main difference between the display device 15 and the display device 13 is that the decorating element 52 of the appearance display device 15 partially covers the third side S3 of the optical element 12 on the X direction, as shown in Fig. 14.

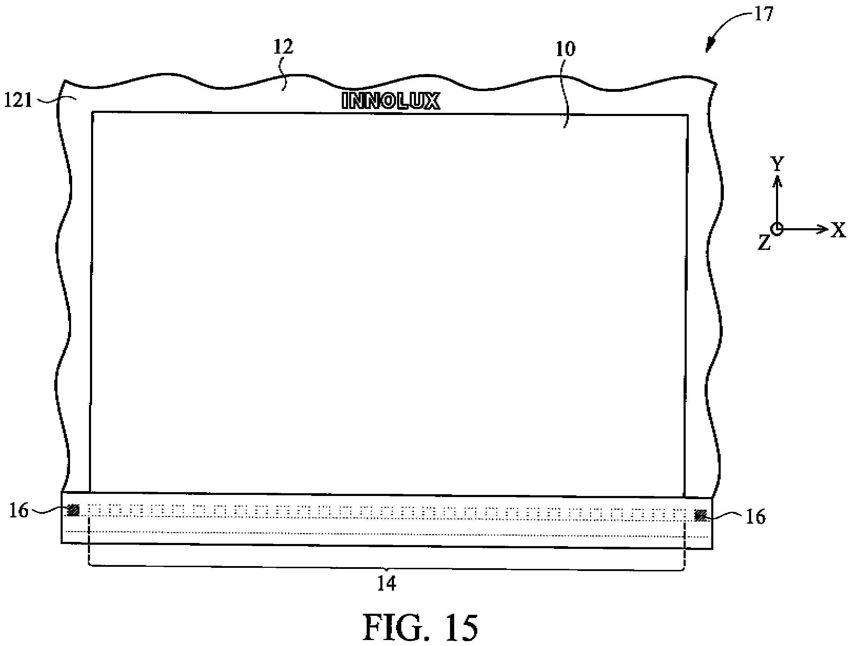

Please refer to Fig. 15, which is a top view of a display device 17, in accordance with another embodiment of the present disclosure. The main difference between the display device 17 and the display device 1a is that the shape of the side of the appearance area 121 of the optical element 12 of the display device 17 is irregular (e.g., curved shape), as shown in Fig. 15.

The above embodiments simplify the conventional structure which requires frame, back board and appearance element at the same time, thereby reducing weight and cost and simplifying assembly complexity.

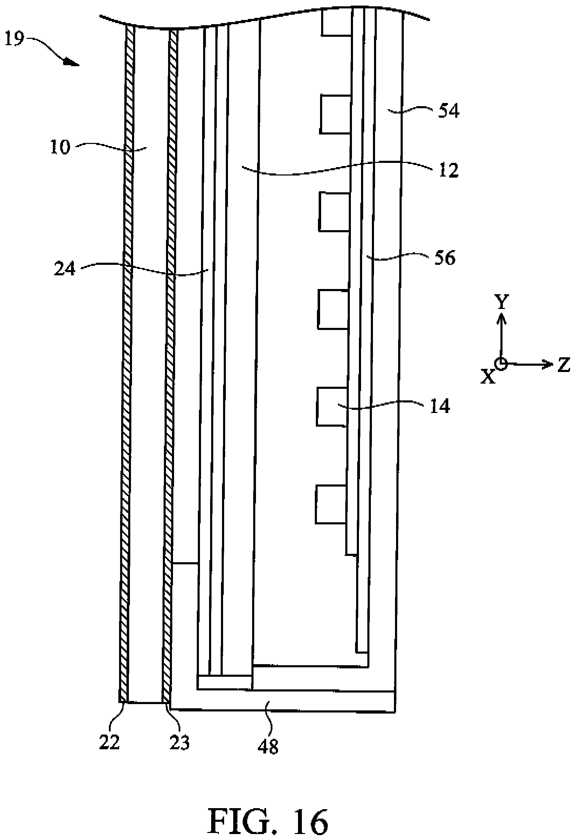

Please refer to Fig. 16, which is a partial cross-sectional view of a display device 19, in accordance with another embodiment of the present disclosure. The main difference between the display device 19 and the display device 1a is that the first light source 14 of the display device 19 is a direct back-light type of light source. As shown in Fig. 16, the display device 19 further includes a back board 54, and the optical element 12 is disposed between the back board 54 and the display panel 10. The display panel 10 and the first light source 14 are disposed on two opposite sides of the optical element 12, and the first light source 14 is disposed between the optical element 12 and the back board 54. The first light source 14 of the display device 19 is a direct backlight type of light source, so the optical element 12 may be a plate to provide a uniform plane light source for the display panel 10, for example, a diffusion plate. It should be noted that only a cross-sectional view of one of the sides of the display device 19 is shown in Fig. 16, and at least one portion of the optical element 12 may extend outward and be exposed from the other sides of the display panel 10 to function as a appearance area 121. Furthermore, the display device 19 may further include a reflector 56, which is disposed on the inner side of the back board 54. The light emitted from the first light source 14 may be effectively reflected by the reflector 56 to the display area of the display panel 10.

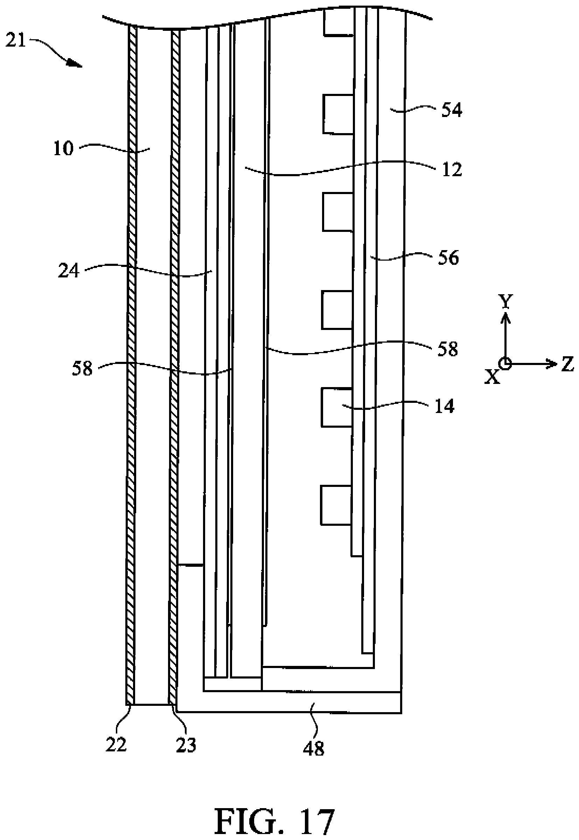

Please refer to Fig. 17, which is a partial cross-sectional view of a display device 21, in accordance with another embodiment of the present disclosure. The main difference between the display device 21 and the display device 19 is that the display device 21 further incudes two diffusion layers 58, and the optical element 12 is disposed between the two diffusion layers 58, as shown in Fig. 17. In this embodiment, the diffusion layers 58 are used to provide a uniform plane light source for the display panel 10. Generally, the diffusion layer 58 may be a soft film. Therefore, the optical element 12 may be a harder and transparent substrate with high transmittance (e.g., glass substrate or plastic substrate). The two diffusion layers 58 may be respectively disposed on two opposite sides of the transparent substrate, and at least one portion of the transparent substrate extends outward and is exposed from the display panel 10 to function as a appearance area 121 in the present disclosure. It should be noted that only a cross-sectional view of one of the sides of the display device 21 is shown in Fig. 17, and at least one portion of the optical element 12 extends outward and is exposed from the other sides of the display panel 10 to function as the appearance area 121.

It should be noted that the holder, board case and back track are also suitable for the display device 19 shown in Fig. 16 and the display device 21 shown in Fig. 17. When the holder is included in the display devices 19 and 21, the display panel 10 and the optical element 12 are disposed on the holder. When the board case is included in the display devices 19 and 21, the board case may be disposed on the holder or the bottom back board 54. When the back track is included in the display devices 19 and 21, one end of the back track may be connected to the holder, and another end of the back track may be connected to the display panel, optical element or bottom back board. The details of the holder, board case and back track have been described earlier, and will not be repeated here.

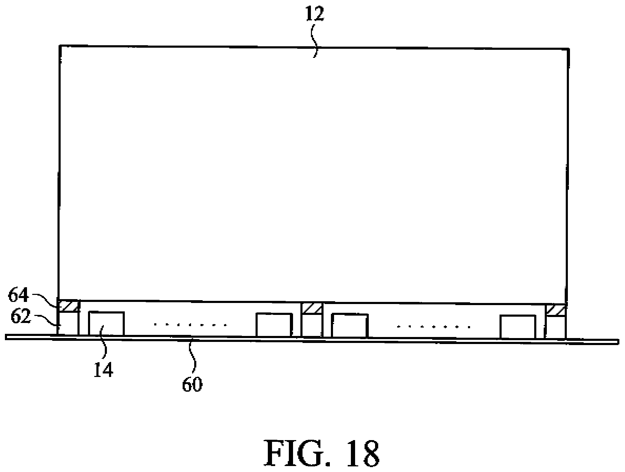

Please refer to Fig. 18, which is a top view of an optical element 12 and a first light source 14, in accordance with another embodiment of the present disclosure. As shown in Fig. 18, a substrate 60 may be further included in the present disclosure, and the first light source 14 is disposed on the substrate 60 to form a light bar, wherein the substrate 60 may be a printed circuit board (PCB) or a flexible printed circuit (FPC). Furthermore, a plurality of block bodies 62 may be disposed on the substrate 60. In this embodiment, the block bodies 62 may be disposed alternatively, and one or more first light source 14 may be disposed between each of the two adjacent block bodies 62. The top surface of the block body 62 and the side of the optical element 12 may be glued and affixed by the adhesive material 64, and hence the light bar formed by the substrate 60 and the first light source 14 is located at one side of the optical element 12 in the present disclosure. As a result, the adhesive material 64 is disposed between the block body 62 and the optical element 12. Furthermore, there is the option for the other side of the substrate 60 to be connected with the body structure of the display device (e.g., heat sink, back board, case, holder, etc.), or to be directly exposed without connection. In this embodiment, the block body 62 may be a component having a different shape and being made of different material than the first light source 14. In other embodiments, one of the first light sources 14 may be in-active and used as the block body 62. In an embodiment, the block body 62 may further have a recess (not shown), the shape of the recess is not limited, and the recess may be used to accommodate at least one portion of the adhesive material 64. In an embodiment, the height of the block body 62 and that of the first light source 14 may be the same or different and is not limited, which depends on the design requirement.

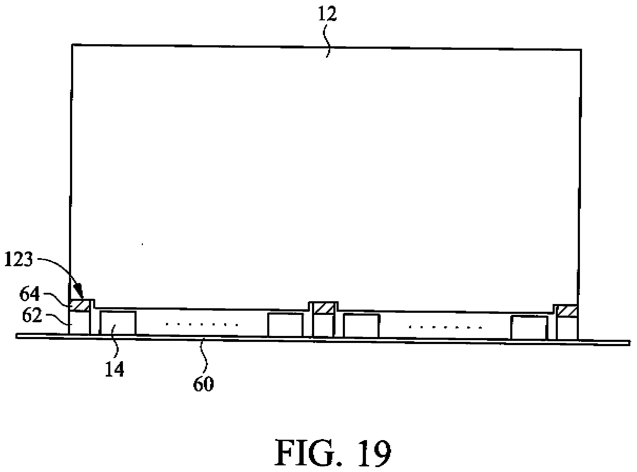

Please refer to Fig. 19, which is a top view of an optical element 12 and a first light source 14, in accordance with another embodiment of the present disclosure. The main difference between the embodiments in Figs. 19 and 18 is that the side of the optical element 12 in Fig. 19 has a plurality of recesses 123 corresponding to a plurality of block bodies 62. As shown in Fig. 19, the adhesive material 64 may be used to glue and affix the top surface of the block body 62 and the recess 123 on the side of the optical element 12, and thus the light bar formed from the substrate 60 and the first light source 14 is disposed on one side of the optical element 12 in the present disclosure.

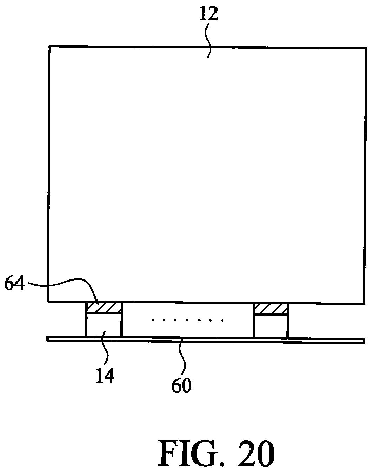

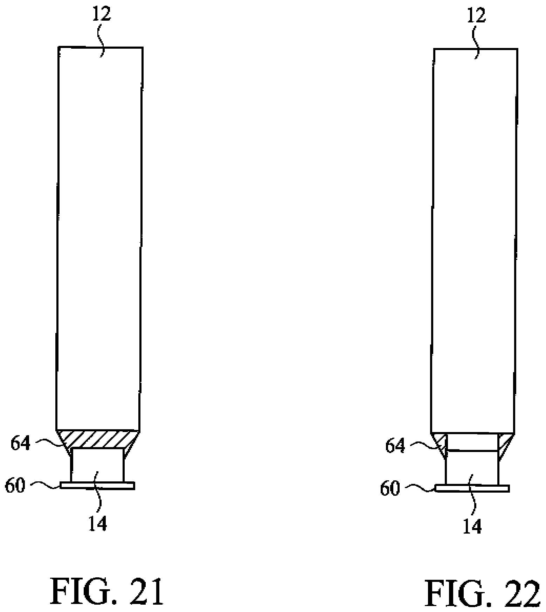

Please refer to Figs. 20 and 21, wherein Fig. 20 is a top view of an optical element 12 and a first light source 14, in accordance with another embodiment of the present disclosure, and Fig. 21 is a side view of the optical element 12 and the first light source 14 in Fig. 20. The main difference between the embodiments in Figs. 20 and 18 is that no block body 62 is disposed on the substrate 60 in Fig. 20. As shown in Fig. 20, the top surface of the first light source 14 and the side of the optical element 12 may be affixed by the adhesive material 64, and hence the light bar formed from the substrate 60 and the first light source 14 is located at one side of the optical element 12 in the present disclosure. Furthermore, as shown in Fig. 21, the space between the side of the optical element 12 and the top surface of the first light source 14 may be fully filled by the adhesive material 64. As a result, the adhesive material 64 is disposed between the first light source 14 and the optical element 12.

Please refer to Fig. 22, which is a side view of an optical element 12 and a first light source 14, in accordance with another embodiment of the present disclosure. The main difference between the embodiments in Figs. 22 and 21 is that the adhesive material 64 is optionally disposed on at least one side of the first light source 14 in Fig. 22. In an embodiment, the adhesive material 64 may glue the side of the optical element 12 and at least one side around the first light source 14. As a result, a gap exists between the optical element 12 and the top surface of first light source 14 (the surface at the light emitting direction) for adjusting the distance of light mixing.

It should be noted that the second light source 16 may be disposed on the substrate 60 in Figs. 18 and 22. The configuration and the principle of the second light source may refer to Fig.1 and the related description, and is not repeated here.

Fig. 23 is a perspective view showing the structure of a backlight module R11 and a decorative layer according to one exemplificative embodiment of the present disclosure. The display device of the present embodiment comprises a decorative layer R3 and a backlight module R11. The backlight module R11 comprises: a reflector R300, disposed on the decorative layer R3; a light guide plate R100, disposed on the reflector R300, wherein the light guide plate R100 has a first side R1001, a second side R1002 opposite to the first side R1001 and a third side R1003 adjoins the first side R1001 and the second side R1002, and the second side R1002 faces the reflector R300; a set of optical films, comprising a first diffusion layer R41, wherein the first diffusion layer R41 is disposed on the first side R1001 of the light guide plate R100; and at least one of a refractive layer R200 and a refractive layer R400 disposed on at least one of the first side R1001 and the second side R1002 of the light guide plate R100, wherein the refractive layer R200 or the refractive layer R400 has a refractive index which ranges from 1.15 to 1.45.

Even though the aspect that the refractive layer R200 and the refractive layer R400 are simultaneously disposed on the first side R1001 and the second side R1002 of the light guide plate R100 as shown in Fig. 23, the present disclosure is not limited thereto. Although Fig. 23 does not shown all possible aspects of the present disclosure, the previous phrase saying "at least one of a refractive layer R200 and a refractive layer R400 disposed on at least one of the first side R1001 and the second side R1002 of the light guide plate R100" refers that when the second side R1002 of the light guide plate R100 faces the reflector R300, the refractive layer R200 may be disposed on the second side R1002 of the light guide plate R100, the refractive layer R400 may be disposed on the first side R1001 of the light guide plate R100, or both of the refractive layer R200 and the refractive layer R400 may be disposed on both of the first side R1001 and the second side R1002 of the light guide plate R100.

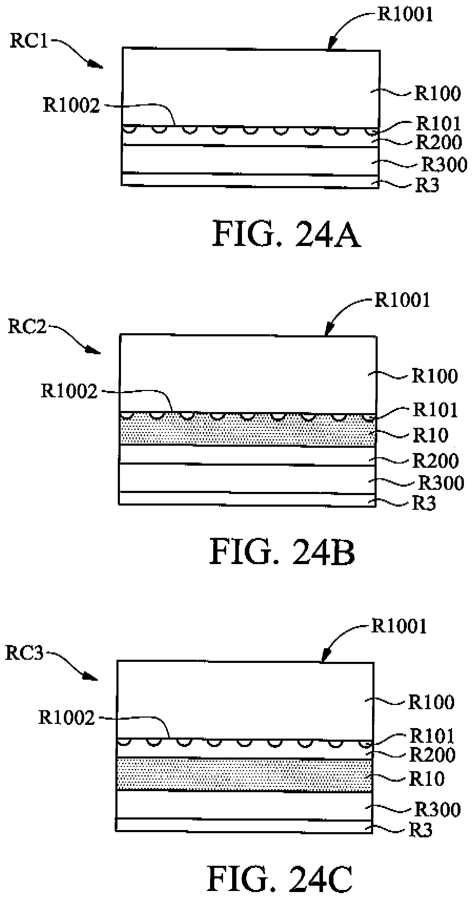

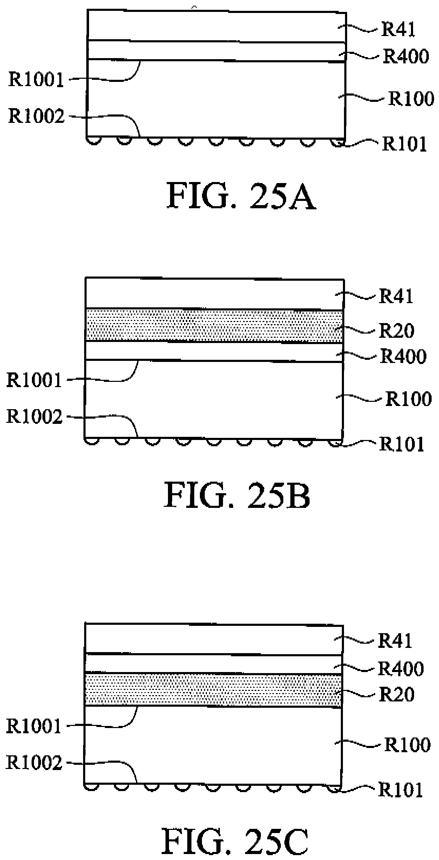

Hereinafter, some different structures of light guide plate R100 and the refractive layer R200 (or the refractive layer R400) in the different embodiments and methods for preparing the same are illustrated with Figs. 24A-24C or 25A-25C. For example, the refractive layer R200 is disposed below the second side R1002 of the light guide plate R100 or the refractive layer R400 is disposed above the first side R1001.

Figs. 24A-24C are perspective view showing the structure of a light guide plate and components below a second side thereof according to different aspects of one exemplificative embodiment of the present disclosure. In Fig. 24A, the structure RC1 of a backlight module is partially depicted, which is the structure comprising the light guide plate R100 and the component below the second side R1002 of the light guide plate R100, had shown in Fig. 23. The structure RC1 comprises a light guide plate R100, a refractive layer R200, a reflector R300, and a decorative layer R3. Therein, the light guide plate R100 has a second side R1002, which is close to the reflector R300. The second side R1002 of the light guide plate R100 is provided with guiding dots R101. The reflector R300 is disposed on the decorative layer R3, the light guide plate R100 is disposed on the reflector R300, and the refractive layer R200 is disposed below the second side R1002 and between the light guide plate R100 and the reflector R300. In Fig. 24A, the decorative layer R3 and the reflector R300 are adhered to each other, and the refractive layer R200 also can adhere to the reflector R300 and the light guide plate R100 adjacent thereto because the refractive layer R200 is a pressure-sensitive adhesive layer made of pressure-sensitive adhesive. In other words, the light guide plate R100, the refractive layer R200, the reflector R300, and the decorative layer R3 are adhered. In the present embodiment, the refractive layer R200 has a refractive index which ranges from 1.15 to 1.45, and a thickness ranges from 0.01 µm to 200 µm. In addition, the decorative layer R3 has a thickness which ranges form 1 µm to 500 µm.

The light guide plate R100 in the disclosed display device may be a polymethyl methacrylate light guide plate (PMMA light guide plate, having a refractive index about 1.49), a cyclo-olefin polymer light guide plate (COP light guide plate, having a refractive index about 1.53), a polycarbonate light guide plate (PC light guide plate, having a refractive index about 1.58), a polystyrene light guide plate (PS light guide plate, having a refractive index about 1.6), a methacrylate-butadiene-styrene copolymer light guide plate (MS light guide plate, having a refractive index about 1.53), or a glass light guide plate (having a refractive index about 1.50), but the present disclosure is not limited thereto.

Additionally, the refractive layer R200 can be a low-refractive-index layer, and the refractive index ranges from 1.15 to 1.45, or ranges from 1.20 to 1.30. When the display device comprises plural refractive layers, these refractive layers may be made of identical or different materials as long as the refractive index of these refractive layers ranges from 1.15 to 1.45. However, the present disclosure is not limited thereto. The refractive layer of the present disclosure can be formed by adhering method or other method such as a coating method, but the present disclosure is not limited thereto. In one embodiment of the present disclosure, the thickness of the refractive layer can range from 0.01 µm to 200 µm. In another embodiment of the present disclosure, the thickness of the refractive layer can range from 10 µm to 200 µm. In further another embodiment of the present disclosure, the thickness of the refractive layer can range from 0.01 µm to 50 µm. However, the present disclosure is not limited thereto. When the thickness of the refractive layer ranges from 0.01 µm to 50 µm, the display device of the present disclosure can further be thinner. When the thickness of the refractive layer ranges from 10 µm to 200 µm, the display device of the present disclosure can have better strength.

In other embodiments of the present disclosure, the refractive layer R200 may be adhesive itself and adheres to layers adjacent thereto. Alternatively, when the refractive layer R200 is not adhesive, the refractive layer can be adhered to layers adjacent thereto through additional adhesive layer R10. As another alternative, the refractive layer is formed by a coating method, which is tightly bound to layers adjacent thereto through a spreading and curing process.

For example, to form a refractive layer R200 between a reflector R300 and a light guide plate R100, the refractive layer R200 can be disposed below the second side R1002 of the light guide plate R100 through the following manners. When the refractive layer R200 is adhesive itself, the refractive layer R200 is directly adhere to the reflector R300 and the light guide plate R100 respectively, as shown in Fig. 24A. Alternatively, a refractive layer R200 is formed using a coating method on the second side R1002 of the light guide plate R100, and the refractive layer R200 is bound tightly to the light guide plate R100, and then the refractive layer R200 is adhered to the reflector R300 by a first adhesive layer R10, as shown in Fig. 24C. As another alternative, a refractive layer R200 is formed using a coating method on the reflector R300, and the refractive layer R200 is bound tightly to the reflector R300, and then the refractive layer R200 is adhered to the light guide plate R100 by a first adhesive layer 10, as shown in Fig. 24B. As a further alternative, a refractive layer R200 is formed using a coating method on the second side R1002 of the light guide plate R100, and then a reflector R300 is formed using a coating method on the refractive layer R200, as shown in Fig. 24A. However, the present disclosure is not limited thereto.

Figs. 24B and 24C are based on different aspects of the refractive layer R200 that is not adhesive itself. In the embodiments of the present disclosure, when the refractive layer R200 is disposed on the second side R1002 of the light guide plate R100, the display device further comprises a first adhesive layer R10. The first adhesive layer R10 may be sandwiched between the refractive layer R200 and the light guide plate R100 (as shown in Fig. 24B), or between the refractive layer R200 and the reflector R300 (as shown in Fig. 24C). In addition, a refractive index of the first adhesive layer R10 may be greater than the refractive index of the refractive layer R200.

Fig. 24B shows the structure RC2 of a backlight module, and the structure RC2 of Fig. 24B is similar to the structure RC1 of Fig. 24A. In the aspect of Fig. 24B, a refractive layer R200 having a thickness ranges from 0.01 µm to 10 µm is formed using a coating method on the reflector R300, the refractive layer R200 is bound tightly to the reflector R300, and then refractive layer R200 is adhered to the second side R1002 of the light guide plate R100 by the first adhesive layer R10, and the light guide plate R100 has the guiding dots R101. The first adhesive layer RIO has a thickness which ranges from about1 µm to 200 µm. Fig. 24C shows the structure RC3 of a backlight module, and the structure RC3 of Fig. 24C is similar to the structure RC1 of Fig. 24A. In the aspect of Fig. 24C, a refractive layer R200 having a thickness ranges from 0.01 µm to 10 µm is formed using a coating method on the second side R1002 of the light guide plate R100, the light guide plate R100 has the guiding dots R101, the refractive layer R200 is bound tightly to the light guide plate R100 and directly contacts the second side R1002 of the light guide plate R100, and the refractive layer R200 is adhered to the reflector R300 by the first adhesive layer R10. The first adhesive layer R10 has a thickness which ranges from about 1 µm to 200 µm. In the aspects shown in Figs. 24B and 24C, the decorative layer R3 and the reflector R300 are adhered to each other, and the decorative layer R3 has a thickness which ranges from 1 µm to 500 µm, while the refractive layer R200 has a refractive index which ranges from 1.15 to 1.45, or from 1.2 to 1.3. For example, the refractive index of the first adhesive layer R10 is greater than or equal to 1.45. The refractive index of the first adhesive layer R10 is greater than the refractive index of the refractive layer R200. In addition, the reflector R300 may have a reflectivity, and the reflectivity is greater than or equal to 80%, greater than or equal to 90%, or greater than or equal to 98%. More particularly, for example, the reflector R300 has a reflectivity which ranges from 80% to 100%, from 90% to 100%, or from 98% to 100%.

The first adhesive layer R10 shown in Figs. 24B and 24C may be made of adhesive gel. For example, it may be a pressure-sensitive adhesive layer made of pressure-sensitive adhesive, an adhesive layer RIO made of optical adhesive or hydrogel adhesive. In this case, with pressure applied to the pressure-sensitive adhesive, good adhesion can be achieved in a rapid and technically convenient way. Furthermore, in Figs. 24A-24C, the decorative layer R3 and the reflector R300 are adhered to each other, but the present disclosure puts no limitation to how they are adhered or what they are made of. For example, the decorative layer R3 and the reflector R300 may be adhered to each other by optical adhesive or hydrogel, or a layer with decorative effect can be coated on the reflector R300 to form decorative layer R3. However, the present disclosure is not limited thereto. In addition, the thicknesses of the first adhesive layer, the reflector, and the light guide plate may be adaptive to actual use and application. The present disclosure is not limited thereto.

In one embodiment of the present disclosure, when the disclosed display device comprises plural refractive layers that are not adhesive themselves, and these refractive layers are adhered to layers adjacent thereto by adhesive layers, these adhesive layers may be made of identical or different adhesive gel materials, as long as these adhesive layers have their refractive index greater than the refractive index of the refractive layer R200. However, the present disclosure is not limited thereto.

In one embodiment of the present disclosure, when a first adhesive layer R10 is provided between the light guide plate R100 and the refractive layer R200, the first adhesive layer R10 covers guiding dots R101 at one side of the light guide plate close to the refractive layer R200. In other words, the adhesive gel covers these guiding dots when it is applied to form the first adhesive layer. The present disclosure puts no limitation to how the guiding dots R101 are generated.

In one embodiment of the present disclosure, since the display device does not have a back board, it incorporates a decorative layer R3 at one side of the reflector, and the decorative layer R3 is adhered to the reflector and the bottom. According to the present disclosure, the decorative layer R3 may be implemented in various aspects. For example, the decorative layer may be a simple decorative layer. Alternatively, a black paint is spread to the back of the reflector, and the reflector is adhered to a hard-coating film (HC/PET) by optical coating. In this case, the hard-coating film can be used as a decorative layer R3. Alternatively, the decorative layer R3 and a frame body can be an integrated frame. In this case, a light source, a display panel, a set of optical films, a light guide plate R100, a reflector and other components of the display device may be placed into the space defined by the integrated frame. In one embodiment of the present disclosure, the decorative layer R3 may have a thickness which ranges from 1 µm to 500 µm. In another embodiment of the present disclosure, the decorative layer R3 may have a thickness which ranges from 50 µm to 500 µm. In further another embodiment of the present disclosure, the decorative layer R3 may have a thickness which ranges from 1 µm to 100 µm. However, the present disclosure is not limited thereto. When the decorative layer has a thickness which ranges from 1 µm to 100 µm, the display device of the present disclosure can further be thinner. When the decorative layer R3 has a thickness which ranges from 50 µm to 500 µm, the display device of the present disclosure has better strength. In addition, the decorative layer R3 may be adhered to the reflector, or disposed on the reflector by other manners (for example, a coating method). The present disclosure puts no limitation to aspects of the decorative layer R3.

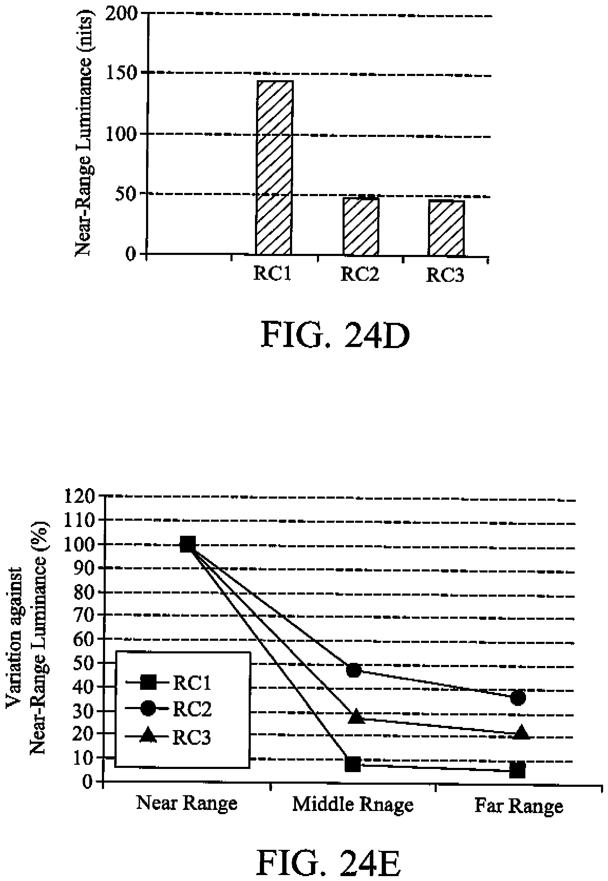

The light guide plates made according to the structures shown in Figs. 24A, 24B, and 24C, respectively correspond to the structures RC1, RC2, and RC3 in Figs. 24D and 24E with their luminance values from a near range, a middle range, and a far range to the luminous surfaces measured using a color analyzer in a darkroom. It is to be noted that the structure RC1 is similar to what is shown in Fig. 24A, with the difference at the refractive layer R200. In particular, the refractive layer R200 of Fig. 24A has a refractive index which ranges from 1.15 to 1.45, but the refractive index of the refractive layer in the structure RC1 used in the present test was designed to be about 1.48. Furthermore, both of the structures RC2 and RC3 had their refractive layer R200 with a refractive index about 1.29. Fig. 24D compares the luminance values (nits) of the three light guide plates measured at a site near the luminous surfaces. Herein, the light guide plate provides better the performance when the front luminance value is lower. Fig. 24E is a comparative graph, wherein each luminance value(nits) of the three light guide plates measured at the site near its luminous surface is defined as 100%, the luminance values are measured at the middle range and the far range, and these luminance values are normalized according to the luminance values measured at the near range. Herein, the light guide plate provides better performance when the decay rate of the luminance value is lower. According to Figs. 24D and 24E, it is clear to obtain that the structure RC1 showed the greatest front luminance value because its high-refractive-index refractive layer R200, and it provides the less effective among the three light guide plates. On the other hand, the structures RC2 and RC3 made using the refractive layer R200 (having a refractive index which ranges from 1.15 to 1.45, or from 1.20 to 1.30) of the present disclosure effectively reduces the front light output after adhered, or improves decay of their luminance.

Herein, Fig. 24A is used for explanation. In one embodiment, a low-refraction paint may be directly applied to the second side R1002 of the light guide plate R100. The low-refraction paint after cured can be directly bound tightly to the light guide plate R100, thereby forming a refractive layer R200 having a thickness ranges from 0.01 µm to 50 µm. Then a high-reflection paint is applied to the refractive layer R200. The high-reflection paint after cured can be directly bound tightly to the refractive layer R200, thereby forming a reflector R300 having a thickness ranges from 1 µm to 100 µm. Therein, the refractive index of the refractive layer R200 ranges from 1.15 to 1.45, or from 1.2 to 1.3. The refractive layer R200 of the present disclosure can be formed by an adhering method or other method such as a coating method, but the present disclosure is not limited thereto. In one embodiment of the present disclosure, the thickness of the refractive layer R200 may ranges from 1 µm to 500 µm. In another embodiment of the present disclosure, the thickness of the refractive layer R200 may ranges from 50 µm to 500 µm. In further another embodiment of the present disclosure, the thickness of the reflector may ranges from 1 µm to 100 µm. However, the present disclosure is not limited thereto. When the thickness of the refractive layer R200 ranges from 1 µm to 100 µm, the display device of the present disclosure can further be thinner. When the thickness of the refractive layer R200 ranges from 50 µm to 500 µm, the display device of the present disclosure can have better strength.

Figs. 25A-25C are perspective view showing the structure of a light guide plate R100 and components above a first side R1001 thereof according to different aspects of the present embodiment.

First, Fig. 25A partially shows the backlight module comprising the light guide plate R100, the refractive layer R400, and the first diffusion layer R41. The light guide plate R100 has its second side R1002 provided with guiding dots R101, and the light guide plate R100 has a first side R1001thereof far away from the second side R1002. In Fig. 25A, the refractive layer R400 is a pressure-sensitive adhesive layer made of pressure-sensitive adhesive, so it adheres to both the first diffusion layer R41 and the light guide plate R100 adjacent thereto. In other words, the light guide plate R100, the refractive layer R400, and the first diffusion layer R41 are adhered to each other. In this case, the refractive index of the refractive layer R400 ranges from 1.15 to 1.45, or the refractive layer R400 has its refractive index which ranges from 1.2 to 1.3 and has its thickness which ranges from 0.01 µm to 200 µm, depending on its actual use.

To form a refractive layer R400 between a light guide plate R100 and a first diffusion layer R41, the refractive layer R400 can be, for example, disposed on the first side R1001 of the light guide plate R100 based on the following aspects. The refractive layer R400 is adhesive itself, and directly adheres to the light guide plate R100 and the first diffusion layer R41 respectively, as shown in Fig. 25A. Alternatively, a refractive layer R400 is formed using a coating method on the first side R1001 of the light guide plate R100, the refractive layer R400 is bound tightly to the light guide plate R100, and then the refractive layer R400 is adhered to the first diffusion layer R41 by a second adhesive layer R20, as shown in Fig. 25B. As another alternative, a refractive layer R400 is formed using a coating method on the first diffusion layer R41, the refractive layer R400 is bound tightly to the first diffusion layer R41, and then the refractive layer R400 is adhered to the light guide plate R100 by a second adhesive layer R20, as shown in Fig. 25C. As a further alternative, a refractive layer R400 is formed using a coating method on the first side R1001 of the light guide plate R100, and a diffusion layer R41 is formed using a coating method on the refractive layer R400, as shown in Fig. 25A. However, the present disclosure is not limited thereto.

Figs. 25B and 25C show aspects where the refractive layer R400 is not adhesive itself. In one embodiment of the present disclosure, when the refractive layer R400 is disposed on the first side R1001 of the light guide plate R100, the display device further comprises a second adhesive layer R20, wherein the second adhesive layer R20 may be sandwiched between the first diffusion layer R41 and the refractive layer R400 (as shown in Fig. 25B), or between the refractive layer R400 and the light guide plate R100 (as shown in Fig. 25C). In addition, a refractive index of the second adhesive layer R20 may be greater than the refractive index of the refractive layer R400.

The aspect shown in Fig. 25B is similar to that shown in Fig. 25A. In the aspect of Fig. 25B, a refractive layer R400 having a thickness which ranges from 0.01 µm to 10 µm is formed using a coating method on the first side R1001 of the light guide plate R100, the refractive layer R400 is bound tightly to light guide plate R100 and directly contacts the first side R1001 of the light guide plate R100, and then the refractive layer R400 is adhered to the first diffusion layer R41 by the second adhesive layer R20. The second adhesive layer R20 has a thickness which ranges from 1 µm to 200 µm. The aspect shown in Fig. 25C is similar to that shown in Fig. 25A. In the aspect of Fig. 25C, a refractive layer R400 having a thickness which ranges from 0.01 µm to 10 µm is formed using a coating method on the first diffusion layer R41, the refractive layer R400 is bound tightly to the first diffusion layer R41, and then the refractive layer R400 is adhered to the first side R1001 of the light guide plate R100 by the second adhesive layer R20. The second adhesive layer R20 has a thickness which ranges from 1 µm to 200 µm. In the aspects of Figs. 25B and 25C, the refractive layer R400 has a refractive index which ranges from 1.15 to 1.45, or from 1.2 to 1.3. The second adhesive layer R20 has a refractive index greater than or equal to 1.45. Thus, the refractive index of the second adhesive layer R20 is greater than the refractive index of the refractive layer R400.

In Figs. 25A-25C, haze value of the first diffusion layer R41 may range from 40% to 100%, or from 80% to 100%.

Similarly, in Figs. 25A-25C, the material of the second adhesive layer R20 can be identical or different from the material of the first adhesive layer, and the second adhesive layer R20 may be made of adhesive gel. For example, it may be a pressure-sensitive adhesive layer made of pressure-sensitive adhesive, or an adhesive layer made of hydrogel adhesive. In addition, the thicknesses of the second adhesive layer, the first diffusion layer, and the light guide plate may be adaptive to actual use and application. The present disclosure is not limited thereto.

Herein, Fig. 25A is used for explanation. In other embodiments, a low-refraction paint may be directly applied to the first side R1001 of the light guide plate R100. The low-refraction paint, after cured, is directly bound tightly to the light guide plate R100, thereby forming a refractive layer R400 having a thickness which ranges from 0.01 µm to 50 µm. Then a high-haze paint is applied to the refractive layer R400. The high-haze paint, after cured, is directly bound tightly to the refractive layer R400, thereby forming a first diffusion layer R41 having a thickness which ranges from 1 µm to 100 µm. Therein, the refractive index of the refractive layer R400 ranges from 1.15 to 1.45, or from 1.2 to 1.3. The first diffusion layer of the present disclosure can be formed by an adhering method or other method such as a coating method, but the present disclosure is not limited thereto. In one embodiment of the present disclosure, the first diffusion layer may have a thickness which ranges from 1 µm to 200 µm. In another embodiment of the present disclosure, the first diffusion layer may have a thickness which ranges from 50 µm to 200 µm. In further another embodiment of the present disclosure, the first diffusion layer may have a thickness which ranges from 1 µm to 100 µm. However, the present disclosure is not limited thereto. When the first diffusion layer has a thickness ranges from 1 µm to 100 µm, the display device of the present disclosure can further be thinner. When the diffusion layer has a thickness ranges from 50 µm to 200 µm, the display device of the present disclosure can have better strength.

As shown in Fig. 23, in other embodiment of the present disclosure, the display device may comprise the refractive layer R200 and the refractive layers R400, each sandwiched between the light guide plate R100 and the reflector R300, and/or between the light guide plate R100 and the first diffusion layer R41. In addition, Figs. 24A-24C and 25A-25C respectively show different aspects of the components below the second side R1002 of the light guide plate R100 and above the first side R1001, and methods for preparing the same. In the present embodiment, the structure of the components below the second side R1002 of the light guide plate R100 shown in Figs. 24A-24C can be randomly combined with the structure of the components above the first side R1001 of the light guide plate R100 shown in Figs. 25A-25C, to obtain the structure comprising the backlight module and the decorative layer R3 capable of using in the display device of the present disclosure.

Furthermore, as shown in Fig. 23, 24A-24C and 25A-25C, the aspects that the refractive layers R200 and the refractive layers R400 are simultaneously disposed on the first side R1001 and the second side R1002 of the light guide plate R100. However, the present disclosure is not limited thereto. In other embodiment of the present disclosure, only the second side R1002 of the light guide plate R100 is provided with the refractive layer R200, or only the first side R1001 of the light guide plate is provided with the refractive layer R400.

In one embodiment of the present disclosure, the light guide plate of the display device is adhered to the reflector, and/or the light guide plate R100 is adhered to the set of optical films, so as to prevent warping and waving during assembling processes of the films, and reduce the risk of ambient water invasion or foreign material defects. Additionally, by using the adhered combination of the decorative layer R3 and the reflector instead of a back board, or forming the films by coating, the resulting display device can be further thinned.

It is to be understood that assembling of the backlight module of the present disclosure is not limited to what is described herein, and any combinations may be implemented as needed.

Fig. 26A depicts the structure of a display device R12a according to one exemplificative embodiment of the present disclosure. An adhesive gel R30 (e.g. optical coating) is used to bind the light guide plate R100 and the reflector R300 on the decorative layer R3 together. As such, the light guide plate R100 is disposed on the reflector R300. The light guide plate R100 has a first side R1001, a second side R1002 opposite to the first side R1001 and a third side R1003 adjoins the first side R1001 and the second side R1002. A set of optical films R4 is disposed on the first side R1001 of the light guide plate R100. The set of optical films R4 includes, for example, the first diffusion layer R41, the first light-enhancing layer R42, the second light-enhancing layer R43, and the second diffusion layer R44. Then, a light source R5 (in the present embodiment, a light-emitting diode (LED)) and a printed circuit board R6 are assembled. At last, a display panel R7 is disposed on the set of optical films R4 and assembled with a decorating element R1, thereby obtaining a display device R12a. Further, at least a portion of the light guide plate R100 overlaps a display area (not shown) of the display panel R7.

In this embodiment, the decorating element R1 also functions as an appearance set frame which may directly serve as an appearance element. As shown in Fig. 26A, the decorating element R1 encloses the set of optical films R4, the light source R5, the printed circuit board R6, the display panel R7 and the light guide plate R100, wherein at least a flange portion R110 of the decorating element R1 is disposed between the display panel R7 and the light guide plate R100. The flange portion R110 extends inwardly between the display panel R7 and the light guide plate R100, and directly contacts the first side R1001 of the light guide plate R100. The decorating element R1 also contacts the third side R1003 of the light guide plate R100. The above embodiments simplify the conventional structure which requires plastic frame, back board and appearance element at the same time, thereby reducing element numbers, weight and cost and simplifying assembly complexity. Since only the decorating element R1 which functions as an appearance element is left, the display device R12a could be lighter and thinner, and thus reduces not only physical cost but also assembling steps and labor cost. Accordingly, the combination of the decorating element R1 and the decorative layer R3 may constitute the complete appearance of the display, and the user can visually see the decorating element R1 and the decorative layer R3 directly.

In the present embodiment, the assembling can be accomplished by engagement, screws or adhesion, but the present disclosure is not limited thereto. In addition, the display device R12a may further comprise a heat sink (not shown in the figure), which can be disposed besides the printed circuit board R6 or integrated with the printed circuit board R6. In the embodiment, the reflector R300 and the light guide plate R100 are bound using the adhesive gel R30, or the reflector R300 is also adhered to the decorative layer R3 (not shown) by the adhesive layer made of the adhesive gel R30, although only the adhesive gel R30 between the reflector R300 and the light guide plate R100 is shown in Fig. 26A. In the present embodiment, the backlight module and the decorative layer R3 can be any one illustrated in Fig. 23, 24A-24C and 25A-25C, and the present disclosure is not limited thereto. In an embodiment, the optoelectronic component 122 could be disposed in/on the decorating element R1.

In Fig. 26A, some elements of the display device R12a are omitted. For example, the guiding dots R101 on the second side R1002 of the light guide plate R100 shown in Fig. 23 are omitted. In addition, as shown in Figs. 24A and 26A, the adhesive gel R30 shown in Fig. 26A can be the refractive layer R200 shown in Fig. 24A. As shown in Figs. 24B, 24C and 26A, the adhesive gel R30 shown in Fig. 26A can be the first adhesive layer RIO shown in Figs. 24B and 24C when the refractive layer R200 have no adhesive function; and in this case, the refractive layer R200 is omitted in Fig. 26A. Furthermore, the refractive layer R400 and the second adhesive layer R20 shown in Figs. 25A-25C are also omitted in Fig. 26A.

As shown in Fig. 26A, the display device R12a of the present embodiment comprises: the decorative layer R3 and the backlight module shown in Figs. 23, 24A-24C and 25A-25C; a display panel R7 disposed on one side of the set of optical films R4 far away from the light guide plate R100; and a decorating element R1, wherein the backlight module (including the light guide plate R100 and the set of optical films R4) and the display panel R7 are assembled with the decorating element R1. The decorative layer R3 may be contact with or not contact with the decorating element R1.

In the present embodiment, a set of optical films R4 is provided between the light guide plate R100 and the display panel R7. In one embodiment of the present disclosure, when a refractive layer is optionally disposed between the light guide plate R100 and the set of optical films R4, the first diffusion layer R41 of the set of optical films R4 is adhered to the refractive layer. In addition to the binding between the first diffusion layer R41 and the refractive layer, in one embodiment of the present disclosure, optical films of the set of optical films R4 (i.e. the first diffusion layer R41, the first light-enhancing layer R42, the second light-enhancing layer R43, and/or the second diffusion layer R44) are adhered to each other by adhesive gel R30, refractive layer with adhesion (not shown). For improving optical quality, the first diffusion layer R41 and the second diffusion layer R44 may respectively have haze value which ranges from 40% to 100%, from 80% to 100%, or even from 85% to 100%.

In another embodiment of the present disclosure, as shown in Fig. 26B, which is an embodiment of the present invention, the reflector R300, the light guide plate R100, and the decorative layer R3 of the display device R12b are adhered to each other by adhesive gel R30. Then the set of optical films R4 (which may comprise the first diffusion layer R41, the first light-enhancing layer R42, the second light-enhancing layer R43, and the second diffusion layer R44), a light source R5 (for example, a light emitting diode (LED)) and a printed circuit board R6 are assembled. At last, a display panel R7 is fit into the decorating element R1, thereby finishing the assembly.

Note that, in another embodiment, there is no need for the adhesive gel R30 to be coated entirely. The adhesive gel R30 may be selectively coated on partial areas. For example, it may be coated as a hollow quadrilateral or be coated on at least a side of the second side R1002 between the reflector R300 and the light guide plate R100.

In this embodiment, a top flange portion R111 of the decorating element R1 extends inwardly between the set of optical films R4 and the display panel R7, and directly contacts the top surface of the set of optical films R4. Further, and a bottom flange portion R112 of the decorating element R1 extends between the light guide plate R100 and the decorative layer R3 and directly contacts the second side R1002 (bottom surface) of the light guide plate R100. The bottom flange portion R112, however, does not contact the first side R1001of the light guide plate R100.

Herein, the display device R12b may further comprise a heat sink (not shown in the figure), which can be disposed besides the printed circuit board R6 or integrated with the printed circuit board R6. In the present embodiment, the backlight module and the decorative layer R3 can be any one illustrated in Figs. 23, 24A-24C and 25A-25C, and the present disclosure is not limited thereto.

Since the present disclosure does not need a back board, in Figs. 26A and 26B, hanging holes (not shown) may be formed on the decorating element R1 during the process of injection molding, for the first diffusion layer R41, the first light-enhancing layer R42, the second light-enhancing layer R43, and the second diffusion layer R44 of the set of optical films R4 to hang and position.

In one embodiment of the present disclosure, the decorative layer R3 has a thickness which ranges from 1 µm to 500 µm. The decorative layer R3 may be implemented in various aspects according to the present disclosure. For example, the decorative layer R3 may be a simple decorative layer. Alternatively, a black paint is spread to the back of the reflector, and the reflector is adhered to a hard-coating film (HC/PET) by optical coating. In this case, the hard-coating film can be used as a decorative layer R3. Alternatively, the decorative layer R3 and a frame can be an integrated frame may be seen from the outward appearance. In this case, a light source, a display panel, a set of optical films, a light guide plate, a reflector and other components of the display device R12a or R12b may be placed into the space defined by the integrated frame. In one embodiment of the present disclosure, the decorative layer R3 has a thickness which ranges from 1 µm to 500 µm. In another embodiment of the present disclosure, the decorative layer R3 may have a thickness which ranges from 50 µm to 500 µm. In further another embodiment of the present disclosure, the decorative layer R3 may have a thickness which ranges from 1 µm to 100 µm. However, the present disclosure is not limited thereto. When the decorative layer R3 has a thickness which ranges from 1 µm to 100 µm, the display device R12a or R12b of the present disclosure can further be thinner. When the decorative layer R3 has a thickness which ranges from 50 µm to 500 µm, the display device R12a or R12b of the present disclosure has better strength. In addition, the decorative layer R3 may be adhered to the reflector, or disposed on the reflector via other manners (for example, a coating method). The present disclosure puts no limitation to aspects of the decorative layer R3.

The display panel of the present disclosure may comprise, for example, liquid crystals (LCs), organic light-emitting diodes (OLEDs), quantum dots (QDs), fluorescence molecules, phosphors, light-emitting diodes (LEDs), micro light-emitting diodes (micro LEDs) or other display medium; but the present disclosure is not limited thereto. In addition, the display device R12a or R12b of the present disclosure can be a flexible display, a touch display, or a curved display; but the present disclosure is not limited thereto.

It should be noted that the aforementioned back track is also suitable for the display devices R12a and R12b shown in Figs. 26A and 26B (not shown). When the back track is included in the display devices R12a and R12b in Figs. 26A and 26B, one end of the back track may be connected to the holder, and another end of the back track may be connected to at least one of the display panel R7, light guide plate R100 and the decorative layer R3, but is not limited thereto. For example, one end of the back track may also be connected to the holder, and another end of the back track may be connected to the decorating element R1. The detail of the back track has been described earlier, and will not be repeated here.

The display devices R12a and R12b shown in Figs. 26A and 26B may further include a first polarization layer 22, wherein the display panel R7 is disposed between the first polarization layer 22 and the light guide plate R100, the first polarization layer 22 protrudes from at least one side of the display panel R7, but the present disclosure is not limited thereto. The detail of the first polarization layer 22 has been described earlier, and will not be repeated here. In another embodiment, the decorating element R1 may be covered by the first polarization layer 22 thereon such that a user may see the surface of the first polarization layer 22 rather than the decorating element R1.

In an embodiment, at least one optoelectronic component (now shown) may be disposed on the display area, similar as the optoelectronic component 122 in Fig. 1. The location for disposing the optoelectronic component is not limited, and the optoelectronic component may be disposed on any location on the display area, wherein the disposing amount, the size, and the shape are also not limited, depending on the design requirements. The detail of the optoelectronic component has been described earlier, and will not be repeated here.

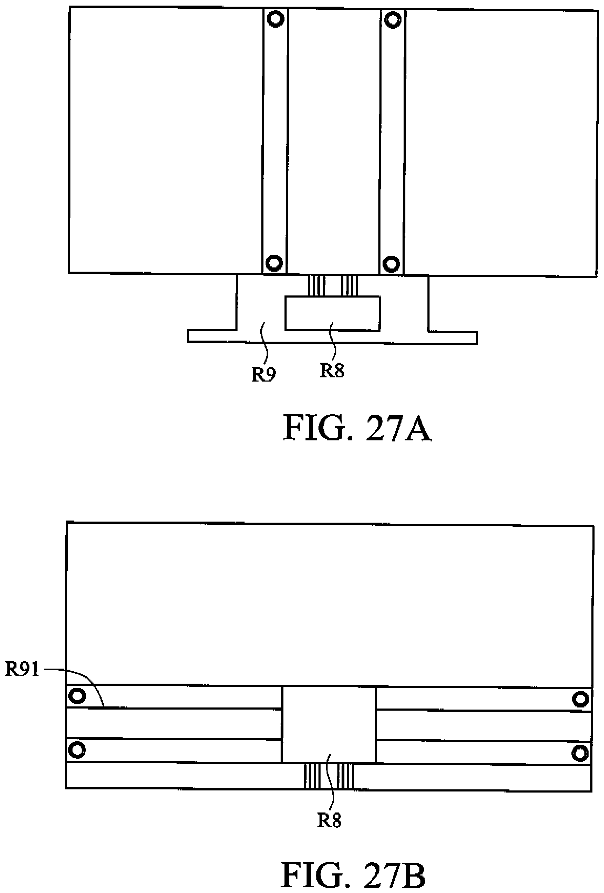

Additionally, in one embodiment of the present disclosure, the display device has its reflector, light guide plate, and decorative layer R3 adhered to each other by adhesive gel and thus eliminates the use of a back board. Thus, in one embodiment of the present disclosure, the system board R8 may be fixed to a stand R9, as shown in Fig. 27A. Alternatively, as shown in Fig. 27B, the frame of the display device may be provided with threaded holes for supporting bars R91 to attach thereto. These supporting bars R91 not only further structurally strengthen the module, but also hold the system board R8 in position. Nevertheless, the foregoing implementation is merely illustrative, and the present disclosure is not limited thereto. The material of the supporting bar may comprise metal or other suitable material, for example, could be stainless steel.

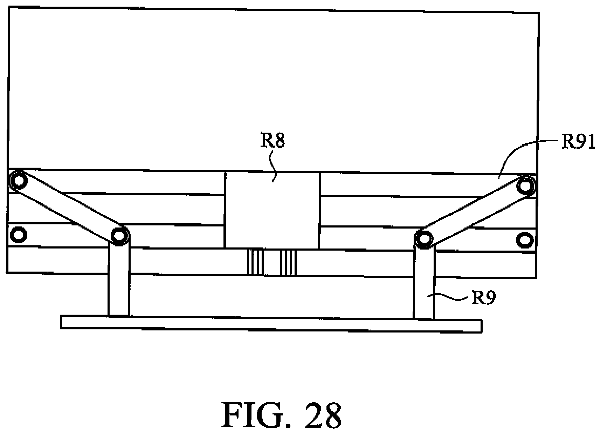

Furthermore, as shown in Fig. 28, the frame of the display device may be provided with threaded holes for supporting bars R91 to attach thereto. These supporting bars R91 not only further structurally strengthen the module, but also hold the stand R9 in position. Nevertheless, the foregoing implementation is merely illustrative, and the present disclosure is not limited thereto and can be combined randomly according to actual use and application.

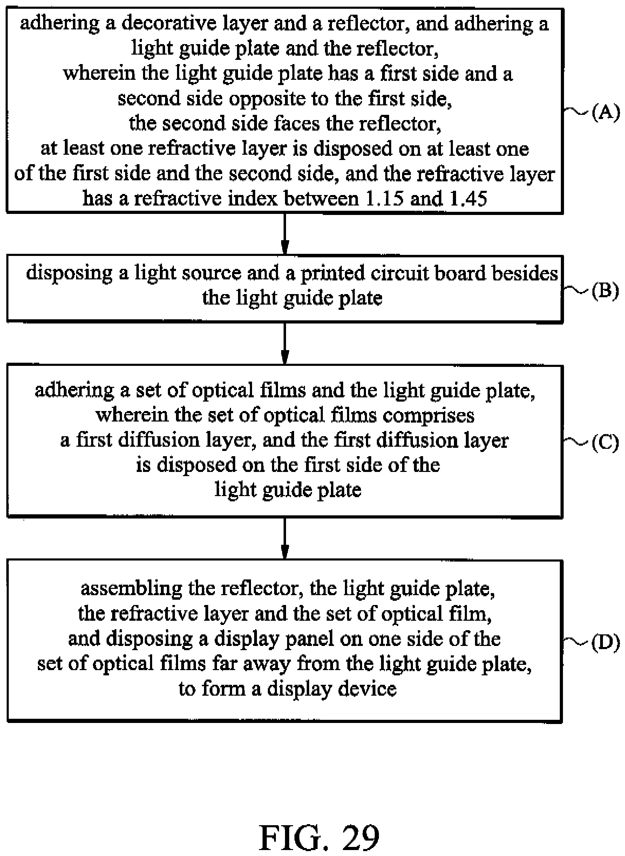

From the description above it is clear that the present disclosure provides a method for manufacturing the display device. As shown in Fig. 29, the light guide plate, the reflector, or the decorative layer R3 are adhered to each other by a refractive layer or adhesive gel (e.g. optical coating). Afterward, the set of optical films is assembled (wherein a refractive layer or optical coating may be optionally used between the optical films, and between the set of optical films and the light guide plate to make them adhered to each other). Subsequently, the light source and the frame are assembled. At last, the display panel is finished by attaching the front frame thereto. Therein, the system board may be mounted on the frame, and the system board or the stand may be supported by supporting bars.

More specifically, as shown in Fig. 29, the present disclosure further provides a method for manufacturing a display device, which may comprise the following steps:
(A) adhering a decorative layer R3 and a reflector R300, and adhering a light guide plate R100 and the reflector R300, wherein the light guide plate R100 has a first side R1001 and a second side R1002 opposite to the first side R1001, the second side R1002 faces the reflector R300, at least one of the refractive layer R200 and the refractive layer R400 is disposed on at least one of the first side R1001 and the second side R1002, and the refractive layer R200 or the refractive layer R400 has a refractive index which ranges from 1.15 to 1.45, as shown in Fig. 23;
(B) disposing a light source R5 and a printed circuit board R6 besides the light guide plate R100, as shown in Fig. 26A;
(C) adhering a set of optical films R4 and the light guide plate R100, wherein the set of optical films R4 comprises a first diffusion layer R41, and the first diffusion layer R41 is disposed on the first side R1001 of the light guide plate R100, as shown in Fig. 26A; and
(D) assembling the reflector R300, the light guide plate R100, the refractive layer R200 (or the refractive layer R400) and the set of optical film 4, and disposing a display panel R7 on one side of the set of optical films R4 far away from the light guide plate R100, to form a display device, as shown in Figs. 23 and 26A.

In the present disclosure, Step (A) through Step (D) can be sequentially or not sequentially performed, according to the design requirements. The present disclosure is not limited thereto.

In one aspect of the present disclosure, as shown in Figs. 24B, 24C and 29, when the refractive layer R200 is disposed on the second side R1002 of the light guide plate R100 in Step (A), the method further comprises a step: forming a first adhesive layer R10, wherein the first adhesive layer RIO is sandwiched between the refractive layer R200 and the light guide plate R100, or between the refractive layer R200 and the reflector R300, and a refractive index of the first adhesive layer RIO may be greater than the refractive index of the refractive layer R200. Herein, the material and the property of the first adhesive layer RIO are illustrated before, and are not repeated again.

More specifically, as shown in Figs. 24A-24C and 29, in Step (A), to set the refractive layer R200 between the reflector R300 and the light guide plate R100, the refractive layer R200 can be disposed on the second side R1002 of the light guide plate R100 through the following manners. When the refractive layer R200 is adhesive itself, the refractive layer R200 is directly adhere to the reflector R300 and the light guide plate R100 respectively, as shown in Fig. 24A. Alternatively, a refractive layer R200 is formed using a coating method on the second side R1002 of the light guide plate R100, wherein the refractive layer R200 is bound tightly to the light guide plate R100, and then the refractive layer R200 is adhered to the reflector R300 by a first adhesive layer R10, as shown in Fig. 24C. As another alternative, a refractive layer R200 is formed using a coating method on the reflector R300, and the refractive layer R200 is bound tightly to the reflector R300, and then the refractive layer R200 is adhered to the light guide plate R100 by a first adhesive layer10, as shown in Fig. 24B. As a further alternative, a refractive layer R200 is formed using a coating method on the second side R1002 of the light guide plate R100, and then a reflector R300 is formed using a coating method on the refractive layer R200, as shown in Fig. 24A. In addition, the decorative layer can be formed on the reflector R300 by a coating method. However, the present disclosure is not limited thereto.

In another aspect of the present disclosure, as shown in Figs. 25B, 25C and 29, when the refractive layer R400 is disposed on the first side R1001 of the light guide plate R100 in Step (A), the method further comprises a step: forming a second adhesive layer R20, wherein the second adhesive layer R20 is sandwiched between the first diffusion layer R41 and the refractive layer R400, or between the refractive layer R400 and the light guide plate R100, and a refractive index of the second adhesive layer R20 is greater than the refractive index of the refractive layer R400. Herein, the material and the property of the second adhesive layer R20 are illustrated before, and are not repeated again.

More specifically, as shown in Figs. 25A-25C and 29, in Step (A), to place the refractive layer R400 between the light guide plate R100 and the set of optical films (for example, the first diffusion layer R41), the refractive layer R400 can be disposed on the first side R1001 of the light guide plate R100 based on the following aspects. The refractive layer R400 is adhesive itself, and directly adheres to the light guide plate R100 and the set of optical films (for example, the first diffusion layer R41) respectively, as shown in Fig. 26A. Alternatively, a refractive layer R400 is formed using a coating method on the first side R1001 of the light guide plate R100, the refractive layer R400 is bound tightly to the light guide plate R100, the refractive layer R400 is adhered to the first diffusion layer R41 of the set of optical films by a second adhesive layer R20, and the second adhesive layer R20 is sandwiched between the first diffusion layer R41 and the refractive layer R400, as shown in Fig. 26B. As another alternative, a refractive layer R400 is formed using a coating method on the set of optical films (for example, the first diffusion layer R41), the refractive layer R400 is bound tightly to the first diffusion layer R41, the refractive layer R400 is adhered to the light guide plate R100 by a second adhesive layer R20, and the second adhesive layer R20 is sandwiched between the refractive layer R400 and the light guide plate R100, as shown in Fig. 26C. As a further alternative, a refractive layer R400 is formed on the first side R1001 of the light guide plate R100 by a coating method, and a diffusion layer R41 of the set of the optical film is formed on the refractive layer R400 by a coating method, as shown in Fig. 26A. However, the present disclosure is not limited thereto.

In the method for manufacturing the display device according to one embodiment of the present disclosure, the backlight module may further comprise other components, which includes and are not limited to: a heat sink. These components may be assembled into the frame in Step (C). A system board and other additional components may be provided as needed after Step (D). Since there is no back board used in the present disclosure, the system board and other additional components as described above may be installed through the frame. Moreover, a front frame may be provided on the display panel as needed. The present disclosure is not limited thereto.

The aforementioned frame may be implemented in various aspects. Examples thereof include an integrated plastic frame, an assembled frame, an adhesive reflector, a coating layer with reflective property, a decorative tape, or a decorative coating. To achieve better structural strength of display device, particularly for structural strength of the frame, the frame is a plastic frame. For the purpose of flexibility or light weight, the frame can be prepared by flexible materials. However, the present disclosure puts no limitation to the aspects of the frame, and different aspects may be used according to practical needs.

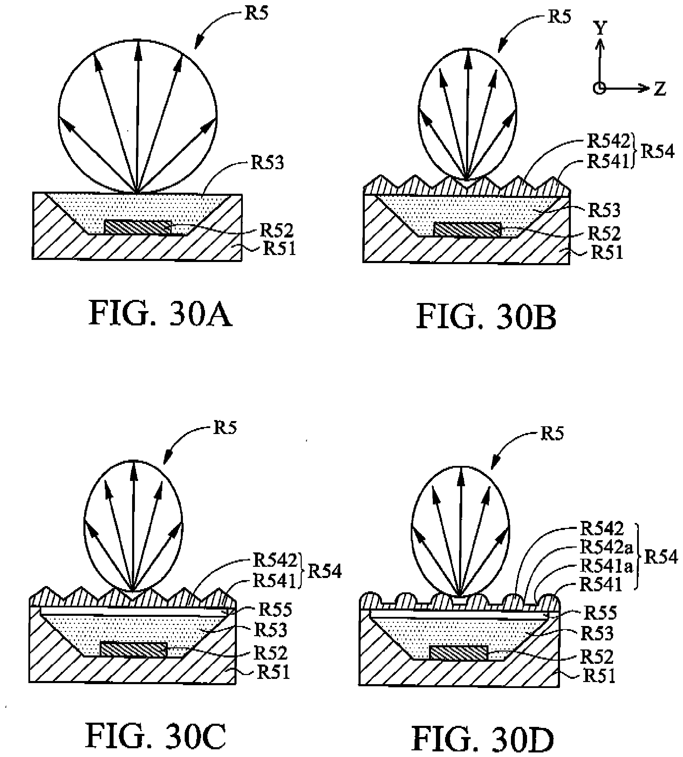

Figs. 30A-30D depict the structures of light sources used in display devices according to different exemplificative embodiments of the present disclosure. The specific example of the light source is a light-emitting diode (LED).

As shown in Fig. 30A, the light source R5 comprises: a base R51; a light emitting chip R52 disposed on the base R51; and a phosphor layer R53 disposed on the base R51 and the light emitting chip R52. The light source R5 shown in Fig. 30A can emit light with circular light type. For example, the light source R5 can emit light with a light type having a full width at half maximum (FWHM) around 60 degree. In the present embodiment, the light type of the light source R5 can be measured by a display color analyzer (for example, CA-210 provided by KONICA MINOLTA), a spectrometer (for example, USB 2000), or a Fourier optics viewing angle measurement system to obtain FWHM thereof.

As shown in Figs. 30B-30D, the light source R5 may further comprise: a light adjusting unit R54 disposed on the phosphor layer R53, wherein the light adjusting unit R54 may have plural stripe protrusions (including a first stripe protrusion R541 and a second stripe protrusion R542). When the light source R5 comprises the stripe protrusions (including the first stripe protrusion R541 and the second stripe protrusion R542), the light type of the light emitting from the light source R5 can be an ellipse-like light type, wherein the FWHM thereof at the Z direction is less than 60 degree. In the present disclosure, the Z direction can be a direction perpendicular to the luminous surface of the light guide plate (for example, a direction is perpendicular to the luminous surface of the light guide plate, and the luminous surface is near to the light source of the light guide plate), a direction parallel to an incident surface, or a direction parallel to a center viewing angle of an user. The material of the stripe protrusions is not particularly limited, and can be a transparent heat-resistant material such as plastics, or resins. In the present disclosure, the stripe protrusions can be strip prisms; but the present disclosure is not limited thereto.

The shapes of the stripe protrusions (including the first stripe protrusion R541 and the second stripe protrusion R542) are not particularly limited, as long as the purpose that the FWHM of the light emitting from the light source R5 at the Z direction is less than 60 degree can be achieved. For example, as shown in Figs. 30B and 30C, cross sections of the stripe protrusions (including the first stripe protrusion R541 and the second stripe protrusion R542) may be triangle shape. As shown in Fig. 30D, cross sections of the stripe protrusions (including a first stripe protrusion R541 and a second stripe protrusion R542) can be arc shapes. However, the present disclosure is not limited thereto.

In addition, the arrangement of the stripe protrusions (including the first stripe protrusion R541 and the second stripe protrusion R542) can be continuous or discontinuous, as long as the purpose that the FWHM of the light emitting from the light source R5 at the Z direction is less than 60 degree can be achieved. For example, as shown in Figs. 30B and 30C, when the stripe protrusions are continuously arranged, the first stripe protrusion R541 connects to the second stripe protrusion R542. As shown in Fig. 30D, when the stripe protrusions are not continuously arranged, the first stripe protrusion R541 is adjacent to the second stripe protrusion R542, the first stripe protrusion R541 has a first boundary R541a, the second stripe protrusion R542 has a second boundary R542a, the first boundary R541a is adjacent to the second boundary R542a, and a predetermined distance between the first boundary R541a and second boundary R542a may be designed. However, the present disclosure is not limited thereto, and the aforementioned aspects can be used in combination according to actual applications.

Furthermore, as shown in Figs. 30C and 30D, the light source R5 may further comprise: an air layer R55 disposed between the light adjusting unit R54 and the phosphor layer R53.

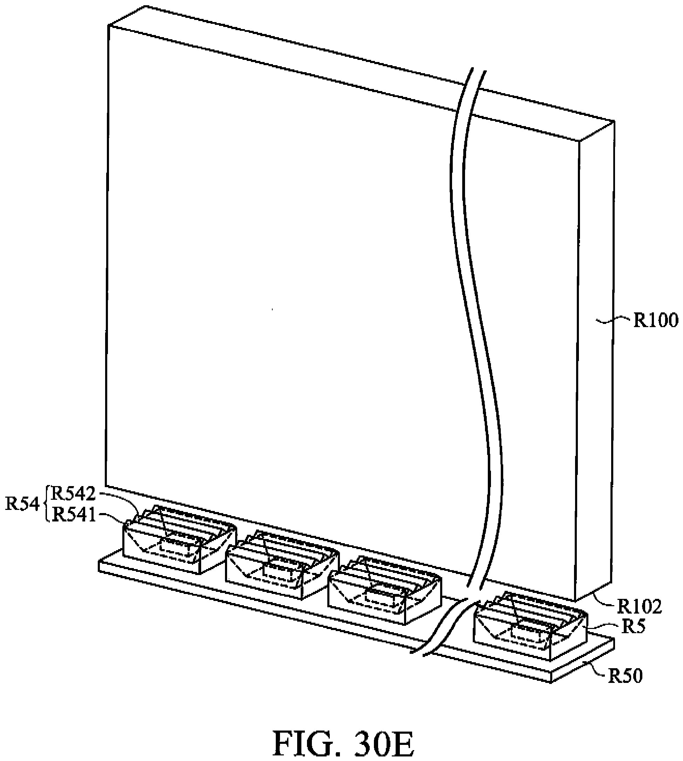

As shown in Fig. 30E, the display device of the present disclosure may further comprise plural light sources R5 disposed besides an incident surface R102 of the light guide plate R100. The structure of the light sources R5 can be shown in Figs. 30B-30D, wherein extension directions of the stripe protrusions (including the first stripe protrusion R541 and the second stripe protrusion R542) are substantially identical to an arrangement direction of the light sources R5.

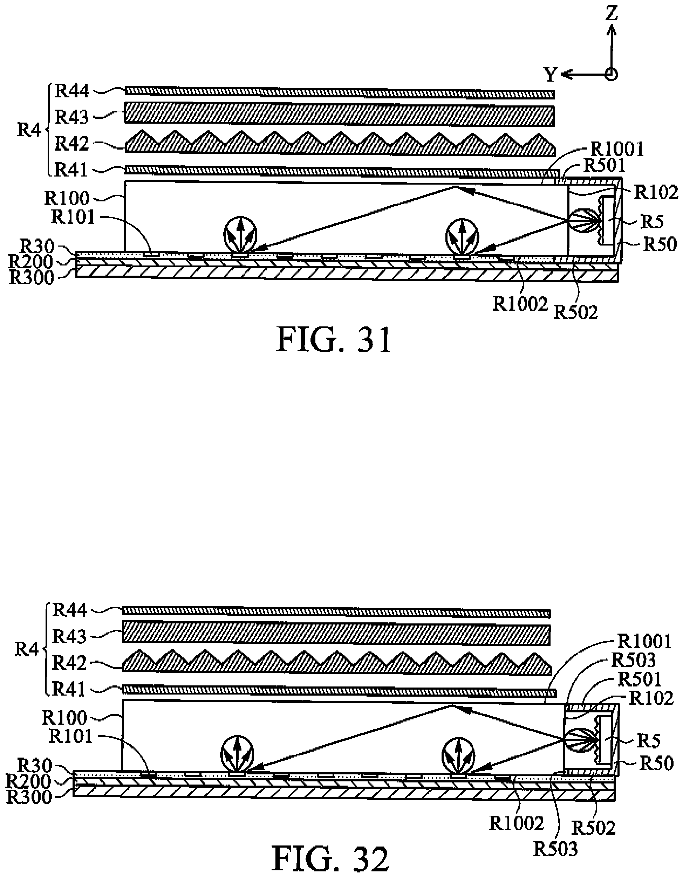

Fig. 31 depicts the profile diagram of a backlight module used in a display device according to one exemplificative embodiment of the present disclosure. The backlight module of the present embodiment further comprises: a light source R5 disposed beside an incident surface R102 of the light guide plate R100, wherein the light source R5 can be any one of the light sources shown in Figs. 30B-30D. In the display device equipped with the light source shown in Fig. 30A, bright lines are occurred at the incident sides (front light), which leads to lose luminance which ranges from about 30% to 50%. In the present embodiment, when the light source shown in Figs. 30B-30D is used, the FWFM of the light emitting from the light source R5 at the Z direction is less than 60 degree; therefore, the problem of the bright lines at the incident sides can be improved, and the luminance lost can be reduced.

In addition, as shown in Fig. 31, for the backlight module of the present embodiment, the light source R5 is disposed in a reflective encasement R50, the reflective encasement R50 is disposed to be adjacent to the incident surface R102 of the light guide plate R100, and the reflective encasement R50 may have a rectangular shape. The reflective encasement R50 may have a first end R501 and a second end R502, and the first end R501 and the second end R502 correspond to the first side R1001 and the second side R1002 of the light guide plate R100. For example, the first end R501 and the second end R502 are respectively disposed on the first side R1001 and the second side R1002 of the light guide plate R100. In the present embodiment, the light guide plate R100 may be partially embedded in the reflective encasement R50. In another embodiment, a part of the reflective encasement R50 can be fixed by an adhesive gel R30, but the present disclosure is not limited thereto.

However, in the present disclosure, the light guide plate R100 may be assembled on the reflective encasement R50 by another manner. For example, as shown in Fig. 32, the first end R501 and the second end R502 of the reflective encasement R50 are respectively assembled on the incident surface R102 of the light guide plate R100 by a fixed adhesive R503. In the present embodiment, the light guide plate R100 is assembled on the reflective encasement R50 by an adhesive method. In another embodiment, a part of the reflective encasement R50 can be fixed by an adhesive gel R30, but the present disclosure is not limited thereto.

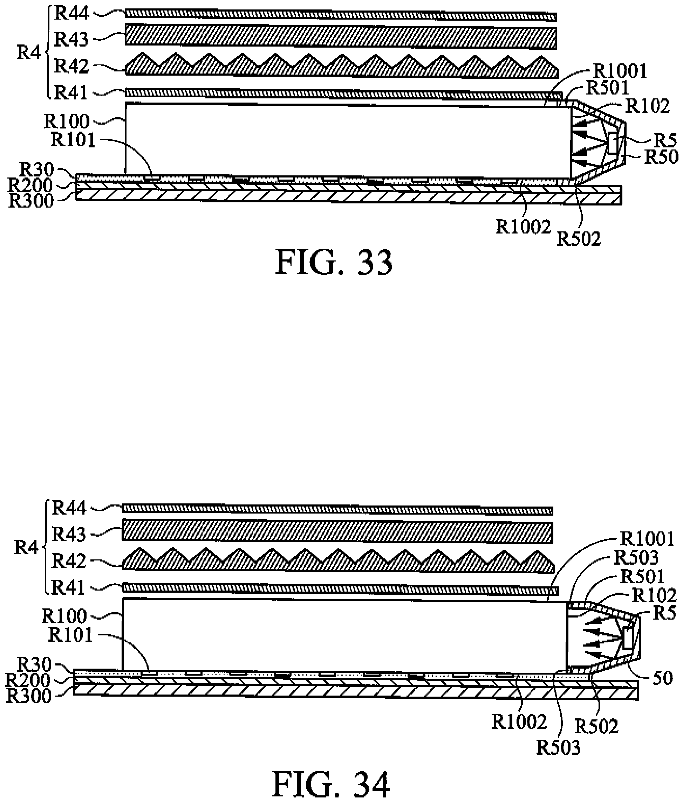

Fig. 33 depicts the structure of a backlight module used in a display device according to another exemplificative embodiment of the present disclosure. The backlight module of the present embodiment further comprises: a light source R5 and a reflective encasement R50, wherein the light source R5 is disposed in the reflective encasement R50, the light source R5 and the reflective encasement R50 are disposed beside an incident surface R102 of the light guide plate R100, a shape of reflective encasement R50 assembled with the light guide plate R100 may be an arc shape, a trapezoid shape or a polygon shape, and the polygon shape may have at least five sides. For example, as shown in Fig. 33, the reflective encasement R50 assembled with the light guide plate R100 has a trapezoid shape. The display device is equipped with the light source shown in Fig. 30A. When the shape of the reflective encasement R50 is adjusted, the light type of the light emitting from the light source R5 can be changed. The incident angle of the light emitting from the light source R5 is reduced, and the FWFM of the light emitting from the light source R5 at the Z direction is less than 60 degree; therefore, the problem of the bright lines at the incident sides can be improved, and the luminance lost can be reduced.

As shown in Fig. 33, in the present embodiment, the light guide plate R100 may be, partially embedded in the reflective encasement R50. The method for embedding the light guide plate R100 in the reflective encasement R50 is similar to that shown in Fig. 31, and not repeated again. Similarly, as shown in Fig. 34, in the present embodiment, the light guide plate R100 is assembled on the reflective encasement R50 by a fixed adhesive R503. The method for adhering the light guide plate R100 on the reflective encasement is similar to that shown in Fig. 32, and not repeated again.

In the embodiments shown in Figs. 31-34, the reflective encasement R50 can be a rigid reflective encasement or a flexible reflective encasement. For example, when the reflective encasement R50 is a rigid reflective encasement, it can be prepared by heat sink materials. When the reflective encasement R50 is a flexible reflective encasement, it can be prepared by the material for forming the reflector R2.

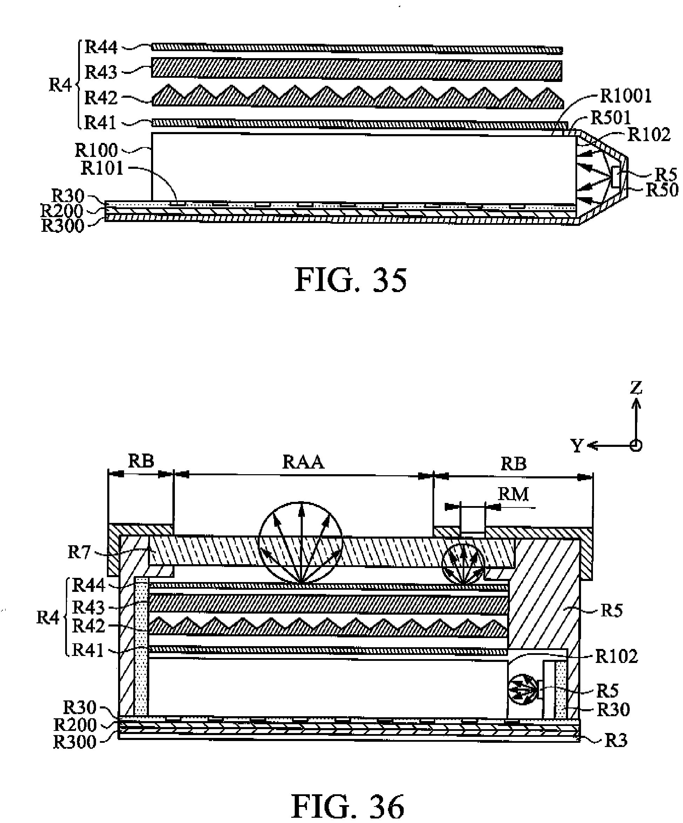

Fig. 35 depicts the structure of a backlight module used in a display device according to another exemplificative embodiment of the present disclosure. When the material of the reflective encasement R50 is identical to the material of the reflector R2, the reflector R2 and the reflective encasement R50 can be integrally formed. In addition, in the backlight modules shown in Figs. 31-34, the reflector R2 and the reflective encasement R50 can also be integrally formed. For example, the first end R501 of the reflective encasement R50 can be directly connected to the reflector R2 to obtain the purpose of integration; and the second end R502 of the reflective encasement R50 is fixed to the light guide plate R100. The light guide plate R100 shown in the embodiment of Fig. 35 is, for example, embedded in the reflective encasement R50, and the embedded manner thereof is similar to that shown in Fig. 31 and is not repeated again. In other embodiment, the second end R502 of the reflective encasement R50 can be fixed on the light guide plate R100 by a fixed adhesive R503. However, the present disclosure is not limited thereto, and the aforesaid aspects can be randomly combined according to actual applications.

Fig. 36 is a cross-sectional view of a display device according to another exemplificative embodiment of the present disclosure. The display device of the present embodiment further comprises: a display region RAA and a non-display region RB, the display region RAA is adjacent to the non-display region RB, and the non-display region RB comprises a sign region RM. The sign region RM can be a hollow pattern of a front frame, or a portion of a front frame equipped with a transparent or colored material, and visible light can be penetrated. In the present embodiment, the sign region RM may be used for labeling logos, marks or other signs. In addition, the display device of the present embodiment may further comprise: a light source R5 disposed beside an incident surface R102 of the light guide plate R100, and the light source R5 can be fixed on a decorating element R1 by adhesive gel R30. In the present embodiment, the light source R5 is disposed in a rectangular space formed by parts of the decorating element R1, wherein, a portion of the decorating element R1 for forming the rectangular space is provided with reflective characteristics (which can be accomplished by coating a reflective material or disposing additional reflective material on the inner wall of the portion of the decorating element R1) and can be served as a reflective encasement R50. In the present embodiment, by the disposition of the sign region RM of the non-display region RB, parts of the light emitting from the light sources R5 can penetrate through the sign region RM to glow a marked pattern. Hence, compared to the display device that additional light source is required in the sign region for glowing a marked pattern, the disposition of the additional light source can be removed in the display device of the present embodiment. The display device shown in Fig. 36 can be used with any fully-adhered structures shown in the aforementioned aspects or embodiments alone or in combination. The display device shown in Fig. 36 may also use any light source with different light types. In addition, the light guide plate with different guiding dot design, mechanical structures, optical films with different properties, or reflectors with different designed can also be used in the present embodiment, to achieve the purpose that parts of the light emitting from the light sources R5 can penetrate through the sign region RM to glow a marked pattern. However, the present disclosure is not limited thereto.

The display device manufacturing according to the foregoing embodiments of the present disclosure may be used with a touch panel to form a touch display device. In addition, the display device or touch display device manufacturing according to the foregoing embodiments of the present disclosure may be applied to any electronic devices, such as displays, mobile phones, laptop computers, video cameras, still cameras, mobile navigators, TV sets, to just name a few without limitation.

In one embodiment of the present disclosure, an adhesive method is putted forward in order to prevent warping or waving during assembling processes of the films, and/or reduce the risk of ambient water invasion or foreign material defects, for example light guide plate is adhered to the reflector, and/or the light guide plate is adhered the set of optical films,. Additionally, the display device can be further thinned by using the adhered combination of the decorative layer and the reflector instead of a back board, or forming the films through coating.

The description above is only the embodiments of the present the disclosure, and is not used to limit the present disclosure. The scope of the present invention is defined by the appended claims.

## Claims

1. A display device (R12a, R12b), comprising:
a backlight module, comprising:
a reflector (R300); and
a light guide plate (R100) disposed on the reflector, wherein the light guide plate has a first side (R1001), a second side (R1002) and a third side (R1003), the second side is opposite to the first side, and the third side adjoins the first side and the second side, wherein the reflector is disposed close to the second side;
a display panel (R7) disposed close to the first side of the light guide plate, wherein the display panel comprises a display area (RAA), at least a portion of the light guide plate overlaps the display area;
a decorating element (R1) disposed close to the third side and has a top flange portion (R111) and a bottom flange portion (R112), wherein at least a portion of the decorating element is disposed between the display panel and the light guide plate, the bottom flange portion is in direct contact with the second side, the decorating element (R1) contacts the third side (R1003) of the light guide plate (R100), the bottom flange portion (R112) does not contact the first side (R1002) of the light guide plate (R100), and the decorating element is a set frame which functions as an appearance element;
a decorative layer (R3), wherein the bottom flange portion (R112) extends between the light guide plate (R100) and the decorative layer (R3);
a set of optical films (R4) disposed on the first side (R1002) of the light guide plate (R100), wherein the top flange portion (R111) extends inwardly between the set of optical films (R4) and the display panel (R7) and directly contacts the top surface of the set of optical films (R4);
a light source (R5);
a printed circuit board (R6), wherein the light source (R5) and the printed circuit board (R6) are disposed besides the light guide plate (R100), the set of optical films (R4), the light source (R5), the printed circuit board (R6), and the display panel (R7) are enclosed by the decorating element (R1); and
an adhesive gel (R30), wherein the light guide plate (R100) and the reflector (R300) on the decorative layer (R3) are bonded through the adhesive gel (R30).

2. The display device as claimed in claim 1, further comprising a back track, one end of the back track is connected to at least one of the display panel and the decorative layer of the reflector, and the back track is used as a wall hanger.

3. The display device as claimed in claim 2, wherein one end of the back track is connected to the decorating element.

4. The display device as claimed in any of the claim 3, further comprising a holder, wherein the display panel and the light guide plate are disposed on the holder, and another one end of the back track is connected to the holder.

5. The display device as claimed in any of the any of the claims 1 to 4, further comprising a first polarization layer (22), wherein the display panel is disposed between the first polarization layer and the light guide plate, and the first polarization layer protrudes from at least one side of the display panel.

6. The display device as claimed in any of the claims 1 to 5, further comprising an optoelectronic component, and the optoelectronic component is disposed on the decorating element.

## Patentansprüche

1. Eine Anzeigevorrichtung (R12a, R12b), umfassend:
ein Modul für die Hintergrundbeleuchtung, umfassend:
einen Reflektor (R300); und
eine Lichtleiterplatte (R100), die auf dem Reflektor angeordnet ist, wobei die Lichtleiterplatte eine erste Seite (R1001), eine zweite Seite (R1002) und eine dritte Seite (R1003) aufweist, die zweite Seite der ersten Seite gegenüberliegt und die dritte Seite an die erste Seite und die zweite Seite angrenzt, wobei der Reflektor nahe der zweiten Seite angeordnet ist;
eine Anzeigetafel (R7), die in der Nähe der ersten Seite der Lichtleiterplatte angeordnet ist, wobei die Anzeigetafel einen Anzeigebereich (RAA) umfasst und mindestens ein Teil der Lichtleiterplatte den Anzeigebereich überlappt;
ein Dekorationselement (R1), das nahe der dritten Seite angeordnet ist und einen oberen Flanschabschnitt (R111) und einen unteren Flanschabschnitt (R112) aufweist, wobei zumindest ein Teil des Dekorationselements zwischen der Anzeigetafel und der Lichtleiterplatte angeordnet ist, wobei der untere Flanschabschnitt in direktem Kontakt mit der zweiten Seite steht, das Dekorationselement (R1) die dritte Seite (R1003) der Lichtleiterplatte (R100) berührt, der untere Flanschabschnitt (R112) die erste Seite (R1002) der Lichtleiterplatte (R100) nicht berührt, und das Dekorationselement ein gesetzter Rahmen ist, der als ein Erscheinungselement fungiert;
eine Dekorschicht (R3), wobei sich der untere Flanschabschnitt (R112) zwischen der Lichtleiterplatte (R100) und der Dekorschicht (R3) erstreckt;
einen Satz optischer Folien (R4), der auf der ersten Seite (R1002) der Lichtleiterplatte (R100) angeordnet ist, wobei sich der obere Flanschabschnitt (R111) zwischen dem Satz optischer Folien (R4) und dem Anzeigefeld (R7) nach innen erstreckt und die obere Fläche des Satzes optischer Filme (R4) direkt berührt;
eine Lichtquelle (R5);
eine gedruckte Schaltungsplatine (R6), wobei die Lichtquelle (R5) und die gedruckte Schaltungsplatine (R6) neben der Lichtleiterplatte (R100) angeordnet sind, der Satz optischer Folien (R4), die Lichtquelle (R5), die gedruckte Schaltungsplatine (R6) und das Anzeigefeld (R7) von dem Dekorationselement (R1) umschlossen sind; und
ein Klebegel (R30), wobei die Lichtleiterplatte (R100) und der Reflektor (R300) auf der Dekorschicht (R3) durch das Klebegel (R30) miteinander verbunden sind.

2. Die Anzeigevorrichtung nach Anspruch 1, die ferner eine hintere Schiene umfasst, wobei ein Ende der hinteren Schiene mit mindestens einer der Anzeigetafel und der dekorativen Schicht des Reflektors verbunden ist und die hintere Schiene als Wandaufhängung verwendet wird.

3. Die Anzeigevorrichtung nach Anspruch 2, wobei ein Ende der hinteren Schiene mit dem Dekorationselement verbunden ist.

4. Die Anzeigevorrichtung nach einem der Ansprüche 3, die ferner einen Halter umfasst, wobei die Anzeigetafel und die Lichtleiterplatte auf dem Halter angeordnet sind und ein anderes Ende der hinteren Schiene mit dem Halter verbunden ist.

5. Die Anzeigevorrichtung nach einem der Ansprüche 1 bis 4, ferner umfassend eine erste Polarisationsschicht (22), wobei die Anzeigetafel zwischen der ersten Polarisationsschicht und der Lichtleiterplatte angeordnet ist und die erste Polarisationsschicht von mindestens einer Seite der Anzeigetafel vorsteht.

6. Die Anzeigevorrichtung nach einem der Ansprüche 1 bis 5, die ferner eine optoelektronische Komponente umfasst, wobei die optoelektronische Komponente auf dem Dekorationselement angeordnet ist.

## Revendications

1. Un dispositif d'affichage (R12a, R12b), comprenant :
un module de rétroéclairage (R11), comprenant :
un réflecteur (18, R300);
une plaque de guidage de lumière (12, R100) disposée sur le réflecteur, la plaque de guidage de lumière ayant un premier côté (R1001), un deuxième côté (R1002) et un troisième côté (R1003), le deuxième côté étant opposé au premier côté, et le troisième côté étant contigu au premier côté et au deuxième côté, dans lequel le réflecteur étant disposé à proximité du deuxième côté ;
un panneau d'affichage (R7) disposé à proximité du premier côté de la plaque de guidage de lumière, dans lequel le panneau d'affichage comprend une zone d'affichage (RAA), au moins une partie de la plaque de guidage de lumière chevauchant la zone d'affichage ; et
un élément décoratif (R1) disposé à proximité du troisième côté et ayant une partie de bride supérieure (R111) et une partie de bride inférieure (R112), dans lequel au moins une partie de l'élément de décoration est disposé entre le panneau d'affichage et la plaque de guidage de lumière, la partie de bride inférieure étant en contact direct avec le deuxième côté, l'élément décoratif (R1) faisant contact avec le troisième côté (R1003) de la plaque de guidage de lumière (R100), la partie de bride inférieure (R112) n'étant pas en contact avec le premier côté (R1002) de la plaque de guidage de lumière (R100), et l'élément décoratif est un cadre de fixation qui opère comme un élément d'apparence ;
une couche décorative (R3), dans lequel la partie de bride inférieure (R112) s'étend entre la plaque de guidage de lumière (R100) et la couche décorative (R3) ;
un ensemble de films optique (R4) disposés sur le premier côté (R1002) de la plaque de guidage de lumière (R100), dans lequel la partie de bride supérieure (R111) s'étends vers l'intérieur entre l'ensemble de films optiques (R4) et le panneau d'affichage (R7) et est en contact direct avec la surface supérieure de l'ensemble de films optiques (R4) ;
une source lumineuse (R5) ;
un circuit imprimé (R6), dans lequel la source lumineuse (R5) et le circuit imprimé (R6) sont disposés à côté de la plaque de guidage de lumière (R100), l'ensemble de films optiques (R4), la source lumineuse (R5), le circuit imprimé (R6), et le panneau d'affichage (R7) sont à l'intérieur de l'élément décoratif (R1) ; et
un gel adhésif (R30), dans lequel la plaque de guidage de lumière (R100) et le réflecteur (R300) sur la couche décorative (R3) sont collées au moyen du gel adhésif (R30).

2. Le dispositif d'affichage tel que revendiqué dans la revendication 1, comprenant en outre une piste arrière, une extrémité de la piste arrière est connectée à au moins l'un parmi le panneau d'affichage, la couche décorative du réflecteur, et la piste arrière est utilisée pour accroche de paroi.

3. Le dispositif d'affichage tel que revendiqué dans la revendication 2, dans lequel une extrémité de la piste arrière est connecté à l'élément décoratif.

4. Le dispositif d'affichage tel que revendiqué dans la revendication 3, comprenant en outre un support, dans lequel le panneau d'affichage et la plaque de guidage de lumière sont disposés sur le support, et une autre extrémité de la piste arrière est connectée au support.

5. Le dispositif d'affichage tel que revendiqué dans l'une quelconque des revendications 1 à 4, comprenant en outre une première couche de polarisation (22), dans lequel le panneau d'affichage est disposé entre la première couche de polarisation et la plaque de guidage de lumière, et la première couche de polarisation fait saillie d'au moins un côté du panneau d'affichage.

6. Le dispositif d'affichage tel que revendiqué dans l'une quelconque des revendications 1 à 5, comprenant en outre un composant optoélectronique, et le composant optoélectronique est disposé sur l'élément de décoration.
